(19) Europäisches Patentamt European Patent Office Office européen des brevets

(11) **EP 4 303 785 B1**

(12) **EUROPEAN PATENT SPECIFICATION**

(45) Date of publication and mention
of the grant of the patent:
**18.12.2024 Bulletin 2024/51**

(21) Application number: **22206945.2**

(22) Date of filing: **11.11.2022**

(51) International Patent Classification (IPC):
**G06Q 10/04** *(2023.01)* **G06Q 10/06** *(2023.01)*

(52) Cooperative Patent Classification (CPC):
**G06Q 10/04; G06Q 10/06;** Y02W 10/10

(54) **RESERVOIR FLOW RATE REGULATING METHOD AND APPARATUS, ELECTRONIC DEVICE, AND STORAGE MEDIUM**

VERFAHREN UND VORRICHTUNG ZUR REGELUNG DER RESERVOIRFLUSSRATE, ELEKTRONISCHE VORRICHTUNG UND SPEICHERMEDIUM

PROCÉDÉ ET APPAREIL DE RÉGULATION DE DÉBIT DE RÉSERVOIR, DISPOSITIF ÉLECTRONIQUE ET SUPPORT DE STOCKAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **07.07.2022 CN 202210795217**

(43) Date of publication of application:
**10.01.2024 Bulletin 2024/02**

(73) Proprietor: **China Three Gorges Co., Ltd.**
**Wuhan Hubei 430010 (CN)**

(72) Inventors:
• **LIU, Xiaoting**
**Wuhan, 430010 (CN)**
• **DAI, Huichao**
**Wuhan, 430010 (CN)**
• **ZENG, Qinghui**
**Wuhan, 430010 (CN)**
• **HU, Peng**
**Wuhan, 430010 (CN)**
• **JIANG, Yunzhong**
**Wuhan, 430010 (CN)**
• **JIANG, Dingguo**
**Wuhan, 430010 (CN)**

(74) Representative: **Groth & Co. KB**
**P.O. Box 6107**
**102 32 Stockholm (SE)**

(56) References cited:
**CN-A- 106 447 078 CN-A- 108 695 902**

## Description

### TECHNICAL FIELD

The present application relates to the technical field of reservoir operation control, in particular to a reservoir flow rate regulating method and apparatus, an electronic device, and a storage medium.

### BACKGROUND

Biogenic elements refer to chemical elements required in the biological growth process, such as carbon, nitrogen, phosphorus, and silicon, which are the necessary conditions for biological growth and development, population reproduction and maintenance of the health and stability of an ecological system. Hydraulic engineering can cause an important influence on the transportation flux of the biogenic elements in the downstream of a river, thereby resulting in the degradation of the ecological system of the river and bringing ecological environment problems. With the construction and operation of large-scale hydraulic engineering, the hydrological process of rivers is changed, the transportation process of biogenic elements in the rivers is affected, and the water ecological conditions of the rivers are greatly changed. To reduce the influence of the hydroelectric engineering on the ecological environment of the river, it is necessary to perform comprehensive regulating of reservoir flow rate for the runoff process and biogenic elements of the hydroelectric engineering in a targeted manner.

In the prior art, the outflow rate of the reservoir is usually regulated according to the minimum ecological water demand or the water demand for typical living beings in a basin. Since the ecological environment of the reservoir basin is complex, if the reservoir flow rate is regulated based on the prior art, the ecological environment of the reservoir basin will not be effectively protected. CN 106 447 078 A refers to an intelligent control system and control method for water conservancy projects to ensure the safety of estuary water supply. CN 108 695 902 B refers to a high-efficiency utilization of water resources and optimal dispatching of hydropower stations.

### SUMMARY

The present application provides a reservoir flow rate regulating method and apparatus, an electronic device, and a storage medium, so as to overcome the defects in the prior art that the ecological environment of a reservoir basin cannot be effectively protected.

In a first aspect of the present application, provided is a water reservoir flow rate regulating method, including:

acquiring historical monitoring data of a hydraulic engineering regulating area, wherein the historical monitoring data is used to represent water quality information of the reservoir in the hydraulic engineering regulating area under different working condition indicators, and the water quality information includes a biogenic element concentration;

building a flow rate regulating guidance model of the reservoir based on the historical monitoring data, wherein the flow rate regulating guidance model is coupled with a relationship between the biogenic element concentration and each working condition indicator;

acquiring current monitoring data and a target biogenic element concentration of the hydraulic engineering regulating area;

determining a target discharge flow rate of the reservoir according to the current monitoring data and the target biogenic element concentration based on the flow rate regulating guidance model; and

performing corresponding flow rate regulating on the reservoir according to the target discharge flow rate.

Optionally, the step of building the flow rate regulating guidance model of the reservoir based on the historical monitoring data includes:

fitting a water flow continuity equation of the hydraulic engineering regulating area according to water flow continuity information represented by the historical monitoring data;

fitting a water flow motion equation of the hydraulic engineering regulating area according to the water flow continuity equation and water flow hydrodynamics information represented by the historical monitoring data;

fitting a solute retention equation of the hydraulic engineering regulating area according to the water flow continuity equation, the water flow motion equation and solute retention information represented by the historical monitoring data; and

building the flow rate regulating guidance model of the reservoir based on the water flow continuity equation, the water flow motion equation and the solute retention equation.

Optionally, the step of fitting the water flow continuity equation of the hydraulic engineering regulating area according to the water flow continuity information represented by the historical monitoring data includes:

using the water flow continuity information represented by the historical monitoring data to fit the following water flow continuity equation of the hydraulic engineering regulating area:

$$\frac{\partial Q}{\partial x} + B\frac{\partial Z}{\partial t} = q_l$$

wherein $x$ represents the on-way position coordinates of a riverway, Q represents the discharge flow rate of a corresponding section, $t$ represents occurrence time, Z represents water level, $B$ represents a water surface width, $q_l$ represents the side inflow rate per unit length of the river, and the water flow continuity information includes the on-way position coordinates of the riverway, the discharge flow rate, the occurrence time, the water level, the water surface width and the side inflow rate per unit length of the river.

The step of fitting the water flow motion equation of the hydraulic engineering regulating area according to the water flow continuity equation and water flow hydrodynamics information represented by the historical monitoring data includes:

using the water flow continuity equation and the water flow hydrodynamics information represented by the historical monitoring data to fit the following water flow motion equation of the hydraulic engineering regulating area:

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

wherein A represents the water-passing area of a section, R represents the hydraulic radius of the section, C represents a Chezy coefficient, g represents gravitational acceleration, $U_l$ represents a component of the average flow velocity of the side inflow section along a riverway direction, and the water flow hydrodynamics information includes the water-passing area of the section, the hydraulic radius of the section and the component of the average flow velocity of the side inflow section along the riverway direction.

The step of fitting the solute retention equation of the hydraulic engineering regulating area according to the water flow continuity equation, the water flow motion equation and the solute retention information represented by the historical monitoring data includes:

using the water flow continuity equation, the water flow motion equation and the solute retention information represented by the historical monitoring data to fit the following solute retention equation of the hydraulic engineering regulating area:

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

wherein $C_s$ represents the biogenic element concentration of the reservoir, c represents the biogenic element concentration of the side inflow, v represents the flow velocity of the water flow, D represents a diffusion coefficient, R represents a chemical reaction rate, K represents an adsorption-desorption coefficient, and the solute retention information includes the biogenic element concentration of the reservoir, the biogenic element concentration of the side inflow and the flow velocity of the water flow.

Optionally, the step of fitting the water flow continuity equation of the hydraulic engineering regulating area according to the water flow continuity information represented by the historical monitoring data includes:

using the water flow continuity information represented by the historical monitoring data to fit the following water flow continuity equation of the hydraulic engineering regulating area:

$$\frac{\partial Z}{\partial t} + \frac{\partial(hU)}{\partial x} + \frac{\partial(hV)}{\partial z} = q_l$$

wherein $x$ represents the on-way position coordinates of the riverway, t represents occurrence time, z represents the on-way vertical-direction position coordinates of the riverway, Z represents water level, h represents water depth, t7 and V respectively represent the longitudinal average flow velocity and the vertical average flow velocity corresponding to the water depth $h$, $q_l$ represents the side inflow rate per unit length of the river, and the water flow continuity information includes the on-way position coordinates of the riverway, the occurrence time, the water level, the water depth, the longitudinal average flow velocity, the vertical average flow velocity and the side inflow rate per unit length of the river.

The step of fitting the water flow motion equation of the hydraulic engineering regulating area according to the water flow continuity equation and water flow hydrodynamics information represented by the historical monitoring data includes:

using the water flow continuity equation and water flow hydrodynamics information represented by the historical monitoring data to fit the following water flow motion equations of the hydraulic engineering regulating area:

$$\frac{\partial(hU)}{\partial t} + \frac{\partial(hU^2)}{\partial x} + \frac{\partial(hUV)}{\partial z}$$
$$= -gh\left(\frac{\partial Z}{\partial x} v_t \left(\frac{\partial^2(hU)}{\partial x^2} + \frac{\partial^2(hU)}{\partial z^2}\right) + \frac{n^2 U \sqrt{U^2 + V^2}}{h^{\frac{2}{3}}}\right)$$
$$+ q_l U_l$$

$$\frac{\partial(hV)}{\partial t} + \frac{\partial(hUV)}{\partial x} + \frac{\partial(hV^2)}{\partial z}$$
$$= -gh\left(\frac{\partial Z}{\partial x} v_t \left(\frac{\partial^2 hV}{\partial x^2} + \frac{\partial^2 hV}{\partial z^2}\right) + \frac{n^2 V \sqrt{U^2 + V^2}}{h^{\frac{2}{3}}}\right) + q_l v_l$$

wherein $U_l$ represents a component of the average flow velocity of the side inflow section along the riverway direction, $v_l$ represents a component of the average flow velocity of the side inflow section along the riverway vertical direction, $n$ represents a Manning roughness coefficient, $v_t$ represents a turbulence viscosity coefficient, and the water flow hydrodynamics information includes the component of the average flow velocity of the side inflow section along the riverway direction and the component of the average flow velocity of the side inflow section along the riverway vertical direction.

The step of fitting the solute retention equation of the hydraulic engineering regulating area according to the water flow continuity equation, the water flow motion equation and the solute retention information represented by the historical monitoring data includes:

using the water flow continuity equation, the water flow motion equation and the solute retention information represented by the historical monitoring data to fit the following solute retention equation of the hydraulic engineering regulating area:

$$\frac{\partial(hC_s)}{\partial t} + \frac{\partial(hUC_s)}{\partial x} + \frac{\partial(hVC_s)}{\partial z} = D_x \frac{\partial^2(hC_s)}{\partial x^2} + D_z \frac{\partial^2(hC_s)}{\partial z^2} - RhC_s - KhC_s + cq_l$$

wherein $C_s$ represents the biogenic element concentration of the reservoir, c represents the biogenic element concentration of the side inflow, $D_x$ represents a diffusion coefficient in the riverway on-way direction, $D_z$ represents the diffusion coefficient in the riverway on-way vertical direction, $R$ represents a chemical reaction rate, $K$ represents an adsorption-desorption coefficient, and the solute retention information includes the biogenic element concentration of the reservoir and the biogenic element concentration of the side inflow.

Optionally, the step of determining the target discharge flow rate of the reservoir according to the current monitoring data and the target biogenic element concentration based on the flow rate regulating guidance model includes:

inputting the target biogenic element concentration, which serves as $C_s$, and the current monitoring data into the flow rate regulating guidance model to obtain the discharge flow rate $Q$ output by the flow rate regulating guidance model; and

determining the discharge flow rate $Q$ output by the flow rate regulating guidance model as the target discharge flow rate of the reservoir.

Optionally, the step of determining the target discharge flow rate of the reservoir according to the current monitoring data and the target biogenic element concentration based on the flow rate regulating guidance model includes:

inputting the target biogenic element concentration, which serves as $C_s$, and the current monitoring data into the flow rate regulating guidance model to obtain the longitudinal average flow velocity $t7$ corresponding to the current water depth output by the flow rate regulating guidance model; and

determining the target discharge flow rate of the reservoir according to the longitudinal average flow velocity $t7$ and the water-passing area of the section of the reservoir.

Optionally, the step of acquiring the historical monitoring data of the hydraulic engineering regulating area includes:

acquiring monitoring data of the hydraulic engineering regulating area based on fixed layered monitoring devices and layered monitoring devices carried by a monitoring ship;

detecting the integrity of the monitoring data to obtain an integrity monitoring result of the monitoring data; and

supplementing missing values of the monitoring data according to the integrity monitoring result of the monitoring data to obtain historical monitoring data of the hydraulic engineering regulating area.

In a second aspect of the present application, provided is a water reservoir flow rate regulating apparatus, including:

a first acquisition module, configured to acquire historical monitoring data of a hydraulic engineering regulating area, wherein the historical monitoring data is used to represent water quality information of the reservoir in the hydraulic engineering regulating area under different working condition indicators, and the water quality information includes a biogenic element concentration;

a model building module, configured to build a flow rate regulating guidance model of the reservoir based on the historical monitoring data, wherein the flow rate regulating guidance model is coupled with a relationship between the biogenic element concentration and each working condition indicator;

a second acquisition module, configured to acquire current monitoring data and a target biogenic element concentration of the hydraulic engineering regulating area;

a determination module, configured to determine a target discharge flow rate of the reservoir according to the current monitoring data and the target biogenic element concentration based on the flow rate regulating guidance model; and

a regulating module, configured to perform corresponding flow rate regulating on the reservoir according to the target discharge flow rate.

Optionally, the model building module is specifically configured to:

fit a water flow continuity equation of the hydraulic engineering regulating area according to water flow continuity information represented by the historical monitoring data;
fit a water flow motion equation of the hydraulic engineering regulating area according to the water flow continuity equation and water flow hydrodynamics information represented by the historical monitoring data;
fit a solute retention equation of the hydraulic engineering regulating area according to the water flow continuity equation, the water flow motion equation and solute retention information represented by the historical monitoring data; and
build the flow rate regulating guidance model of the reservoir based on the water flow continuity equation, the water flow motion equation and the solute retention equation.

Optionally, the model building module is specifically configured to:

use the water flow continuity information represented by the historical monitoring data to fit the following water flow continuity equation of the hydraulic engineering regulating area:

$$\frac{\partial Q}{\partial x} + B\frac{\partial Z}{\partial t} = q_l$$

wherein $x$ represents the on-way position coordinates of a riverway, Q represents the discharge flow rate of a corresponding section, $t$ represents occurrence time, Z represents water level, $B$ represents a water surface width, $q_l$ represents the side inflow rate per unit length of the river, and the water flow continuity information includes the on-way position coordinates of the riverway, the discharge flow rate, the occurrence time, the water level, the water surface width and the side inflow rate per unit length of the river;
use the water flow continuity equation and the water flow hydrodynamics information represented by the historical monitoring data to fit the following water flow motion equation of the hydraulic engineering regulating area:

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

wherein $A$ represents the water-passing area of a section, $R$ represents the hydraulic radius of the section, $C$ represents a Chezy coefficient, g represents gravitational acceleration, $U_l$ represents a component of the average flow velocity of the side inflow section along a riverway direction, and the water flow hydrodynamics information includes the water-passing area of the section, the hydraulic radius of the section and the component of the average flow velocity of the side inflow section along the riverway direction; and
use the water flow continuity equation, the water flow motion equation and the solute retention information represented by the historical monitoring data to fit the following solute retention equation of the hydraulic engineering regulating area:

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

wherein $C_s$ represents the biogenic element concentration of the reservoir, c represents the biogenic element concentration of the side inflow, v represents the flow velocity of the water flow, D represents a diffusion coefficient, $R$ represents a chemical reaction rate, $K$ represents an adsorption-desorption coefficient, and the solute retention information includes the biogenic element concentration of the reservoir, the biogenic element concentration of the side inflow and the flow velocity of the water flow.

Optionally, the model building module is specifically configured to:

use the water flow continuity information represented by the historical monitoring data to fit the following water flow continuity equation of the hydraulic engineering regulating area:

$$\frac{\partial Z}{\partial t} + \frac{\partial (hU)}{\partial x} + \frac{\partial (hV)}{\partial z} = q_l$$

wherein x represents the on-way position coordinates of the riverway, $t$ represents occurrence time, z represents the on-way vertical-direction position coordinates of the riverway, $Z$ represents water level, $h$ represents water depth, $t7$ and $V$ respectively represent the longitudinal average flow velocity and the vertical average flow velocity corresponding to the water depth $h$, $q_l$ represents the side inflow rate per unit length of the river, and the water flow continuity information includes the on-way position coordinates of the riverway, the occurrence time, the water level, the water depth, the longitudinal average flow velocity, the vertical average flow velocity and the side inflow rate per unit length of the river;
use the water flow continuity equation and the water flow hydrodynamics information represented by the historical monitoring data to fit the following water flow motion equations of the hydraulic engineering regulating area:

$$\frac{\partial (hU)}{\partial t} + \frac{\partial (hU^2)}{\partial x} + \frac{\partial (hUV)}{\partial z}$$
$$= -gh\left(\frac{\partial Z}{\partial x}v_t\left(\frac{\partial^2 (hU)}{\partial x^2} + \frac{\partial^2 (hU)}{\partial z^2}\right) + \frac{n^2 U\sqrt{U^2 + V^2}}{h^{\frac{2}{3}}}\right)$$
$$+ q_l U_l$$

$$\frac{\partial (hV)}{\partial t} + \frac{\partial (hUV)}{\partial x} + \frac{\partial (hV^2)}{\partial z}$$
$$= -gh\left(\frac{\partial Z}{\partial x}v_t\left(\frac{\partial^2 hV}{\partial x^2} + \frac{\partial^2 hV}{\partial z^2}\right) + \frac{n^2 V\sqrt{U^2 + V^2}}{h^{\frac{2}{3}}}\right) + q_l v_l$$

wherein $U_l$ represents a component of the average flow velocity of the side inflow section along the riverway direction, $v_l$ represents a component of the average flow velocity of the side inflow section along the riverway vertical direction, n represents a Manning roughness coefficient, $v_t$ represents a turbulence viscosity coefficient, and the water flow hydrodynamics information includes the component of the average flow velocity of the side inflow section along the riverway direction and the component of the average flow velocity of the side inflow section along the riverway vertical direction; and

use the water flow continuity equation, the water flow motion equation and the solute retention information represented by the historical monitoring data to fit the following solute retention equation of the hydraulic engineering regulating area:

$$\frac{\partial(hC_s)}{\partial t} + \frac{\partial(hUC_s)}{\partial x} + \frac{\partial(hVC_s)}{\partial z} = D_x\frac{\partial^2(hC_s)}{\partial x^2} + D_z\frac{\partial^2(hC_s)}{\partial z^2} - RhC_s - KhC_s + cq_l$$

where $C_s$ represents the biogenic element concentration of the reservoir, c represents the biogenic element concentration of the side inflow, $D_x$ represents a diffusion coefficient in the riverway on-way direction, $D_z$ represents the diffusion coefficient in the riverway on-way vertical direction, R represents a chemical reaction rate, K represents an adsorption-desorption coefficient, and the solute retention information includes the biogenic element concentration of the reservoir and the biogenic element concentration of the side inflow.

Optionally, the determination module is specifically configured to:

input the target biogenic element concentration, which serves as $C_s$, and the current monitoring data into the flow rate regulating guidance model to obtain the discharge flow rate Q output by the flow rate regulating guidance model; and
determine the discharge flow rate Q output by the flow rate regulating guidance model as the target discharge flow rate of the reservoir.

Optionally, the determination module is specifically configured to:

input the target biogenic element concentration, which serves as $C_s$, and the current monitoring data into the flow rate regulating guidance model to obtain the longitudinal average flow velocity t7 corresponding to the current water depth output by the flow rate regulating guidance model; and
determine the target discharge flow rate of the reservoir according to the longitudinal average flow velocity t7 and the water-passing area of the section of the reservoir.

Optionally, the first acquisition module is specifically configured to:

acquire monitoring data of the hydraulic engineering regulating area based on fixed layered monitoring devices and layered monitoring devices carried by a monitoring ship;
detect the integrity of the monitoring data to obtain an integrity monitoring result of the monitoring data; and
supplement missing values of the monitoring data according to the integrity monitoring result of the monitoring data to obtain historical monitoring data of the hydraulic engineering regulating area.

In a third aspect of the present application, provided is an electronic device, including: at least one processor and a memory,

wherein the memory stores computer-executable instructions; and

the at least one processor is configured to execute the computer-executable instructions stored in the memory to cause the at least one processor to perform the method according to the first aspect and various possible designs in the first aspect.

In a fourth aspect of the present application, provided is a computer-readable storage medium, wherein the computer-readable storage medium stores computer-executable instructions; and the computer-executable instructions can be executed by a processor to perform the method according to the first aspect and various possible designs in the first aspect.

The technical solutions of the present application have the following advantages:
the present application provides the reservoir flow rate regulating method and apparatus, the electronic device, and the storage medium. The method includes: acquiring the historical monitoring data of the hydraulic engineering regulating area, wherein the historical monitoring data is used to represent the water quality information of the reservoir in the hydraulic engineering regulating area under different working condition indicators, and the water quality information includes the biogenic element concentration; building the flow rate regulating guidance model of the reservoir based on the historical monitoring data, wherein the flow rate regulating guidance model is coupled with a relationship between the biogenic element concentration and each working condition indicator; acquiring the current monitoring data and the target biogenic element concentration of the hydraulic engineering regulating area; determining the target discharge flow rate of the reservoir according to the current monitoring data and the target biogenic element concentration based on the flow rate regulating guidance model; and performing corresponding flow rate regulating on the reservoir according to the target discharge flow rate. According to the method provided by the above solutions, the reservoir flow rate regulation guided by the biogenic element concentration is realized by building the flow rate regulating guidance model coupled with the relationship between the biogenic element concentration and each working condition indicator, which effectively protects the ecological environment of the reservoir basin.

## BRIEF DESCRIPTION OF THE DRAWINGS

To describe the technical solutions in the embodiments of the present application or in the prior art more clearly, the accompanying drawings required for describing the embodiments or the prior art will be described briefly below. Apparently, the accompanying drawings described below show some embodiments in the present disclosure, and a person of ordinary skill in the art may still derive other drawings from these accompanying drawings.

FIG. 1 is a structural schematic diagram of a reservoir flow rate regulating system depended by an embodiment of the present application;

FIG. 2 is a flow chart of a reservoir flow rate regulating method provided by an embodiment of the present application;

FIG. 3 is a schematic diagram of an overall process of exemplary reservoir flow rate regulating provided by an embodiment of the present application;

FIG. 4 is a structural schematic diagram of a reservoir flow rate regulating apparatus provided by an embodiment of the present application; and

FIG. 5 is a structural schematic diagram of an electronic device provided by an embodiment of the present application.

The above accompanying drawings show the explicit embodiments of the present application, which will be described in detail hereafter. The description of these accompanying drawings and texts is not intended to limit the scope of the concept of the present application but to illustrate a concept of the present application to a person skilled in the art with reference to the specific embodiments.

## DETAILED DESCRIPTION

To make the objectives, technical solutions and advantages of the embodiments of the present application clearer, the technical solutions in the embodiments of the present application are described below clearly and completely with reference to the accompanying drawings in the embodiments of the present application. Apparently, the described embodiments are some, but not all of the embodiments. All other embodiments obtained by a person of ordinary skill in the art based on the embodiments of the present application without creative efforts shall fall within the protection scope of the present application.

In addition, the terms "first", "second" and the like are used only for description and shall not be interpreted as an indication or implication of relative importance or an implicit indication of the number of technical features. In the description of the following embodiments, "a plurality of" means two or more, unless otherwise specifically defined.

The traditional flow rate scheduling usually only considers the ecological minimum water demand or the habitat requirements of typical basin organisms (four major domestic fishes and Chinese sturgeon), but does not consider the whole water demand of the ecological system.

In view of the above problem, the embodiments of the present application provide a reservoir flow rate regulating method and apparatus, an electronic device, and a storage medium. The method includes: acquiring historical monitoring data of a hydraulic engineering regulating area, wherein the historical monitoring data is used to represent water quality information of the reservoir in the hydraulic engineering regulating area under different working condition indicators, and the water quality information includes a biogenic element concentration; building a flow rate regulating guidance model of the reservoir based on the historical monitoring data, wherein the flow rate regulating guidance model is coupled with a relationship between the biogenic element concentration and each working condition indicator; acquiring current monitoring data and a target biogenic element concentration of the hydraulic engineering regulating area; determining a target discharge flow rate of the reservoir according to the current monitoring data and the target biogenic element concentration based on the flow rate regulating guidance model; and performing corresponding flow rate regulating on the reservoir according to the target discharge flow rate. According to the method provided by the above solution, the reservoir flow rate regulation guided by the biogenic element concentration is realized by building the flow rate regulating guidance model coupled with the relationship between the biogenic element concentration and each working condition indicator, which effectively protects the ecological environment of the reservoir basin.

The following several specific embodiments may be combined with each other, and the same or similar concepts or processes may not be repeatedly described in some embodiments. The embodiments of the present application will be described below with reference to the accompanying drawings.

Firstly, the structure of a reservoir flow rate regulating system depended by the present application is described as follows.

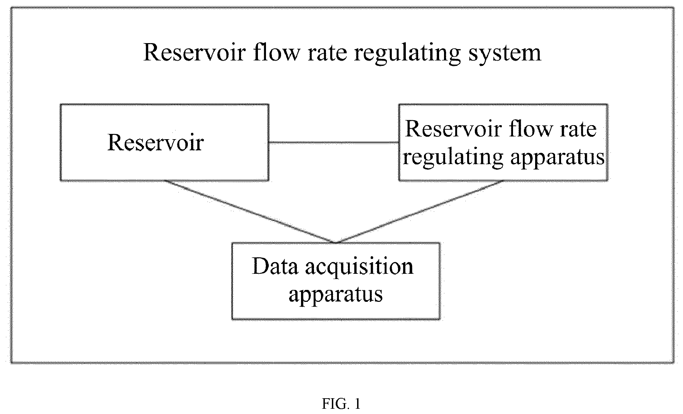

The reservoir flow rate regulating method and apparatus, the electronic device, and the storage medium, provided by the embodiments of the present application, are suitable for regulating the discharge flow rate of the reservoir. As shown in FIG. 1, FIG. 1 is a structural schematic diagram of a reservoir flow rate regulating system depended by an embodiment of the present application, which mainly includes a reservoir, a data acquisition apparatus, and a reservoir flow rate regulating apparatus for regulating the flow rate of the reservoir. Specifically, current monitoring data of a hydraulic engineering regulating area to which the reservoir belongs may be acquired based on the data acquisition apparatus, and the acquired data is sent to the reservoir flow rate regulating apparatus. The apparatus controls a discharge flow rate of the reservoir according to the acquired data and the current determined target biogenic element concentration.

An embodiment of the present application provides a reservoir flow rate regulating method for regulating the flow rate of the reservoir of the hydraulic engineering regulating area. An execution body for the embodiment of the present application is an electronic device, such as a server, a desktop computer, a notebook computer, a tablet personal computer, and other electronic devices for processing hydraulic engineering data.

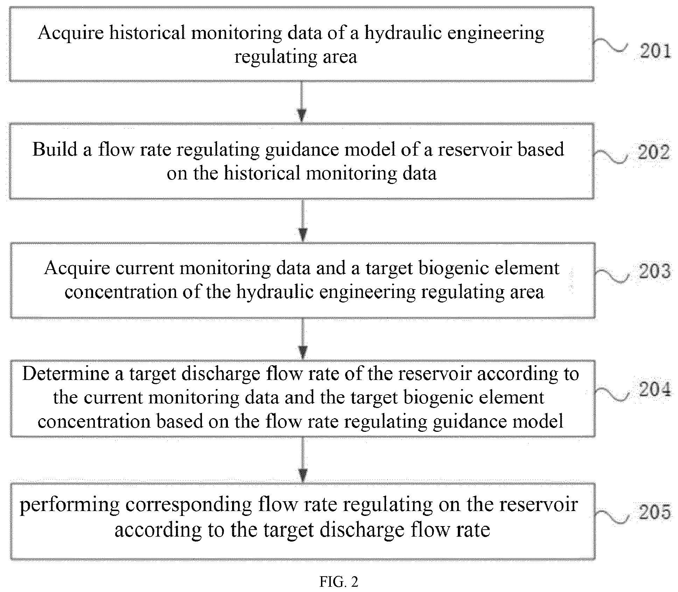

As shown in FIG. 2, which is a flow chart of a reservoir flow rate regulating method provided by an embodiment of the present application, the method includes the following steps.

Step 201; historical monitoring data of a hydraulic engineering regulating area is obtained, wherein the historical monitoring data is used to represent water quality information of the reservoir in the hydraulic engineering regulating area under different working condition indicators, and the water quality information includes a biogenic element concentration. The historical monitoring data acquired by the embodiment of the present application may cover monitoring data of the hydraulic engineering regulating basin in the past year or past several years.

Step 202: a flow rate regulating guidance model of the reservoir is built based on the historical monitoring data.

The flow rate regulating guidance model is coupled with a relationship between the biogenic element concentration and each working condition indicator.

Specifically, a relationship function between the biogenic element concentration and each working condition indicator may be fitted according to the relationship between the biogenic element concentration represented by the historical monitoring data and each working condition indicator, and finally, the flow rate regulating guidance model of the reservoir is built based on the obtained relationship function.

Step 203: current monitoring data and a target biogenic element concentration of the hydraulic engineering regulating area are acquired.

It should be noted that the current monitoring data includes the current working condition indicator of the reservoir, and the target biogenic element concentration is a biogenic element concentration corresponding to an ideal ecological environment.

Step 204: a target discharge flow rate of the reservoir is determined according to the current monitoring data and the target biogenic element concentration based on the flow rate regulating guidance model.

Specifically, the current monitoring data and the target biogenic element concentration may be input into the flow rate regulating guidance model so as to determine the current working condition of the reservoir according to various current working condition indicators included in the current monitoring data based on the flow rate regulating guidance model. Then, it is determined how much discharge flow rate the reservoir needs to set under the current working condition to reach the target biogenic element concentration according to the target biogenic element concentration, that is, the target discharge flow rate is determined.

Step 205: corresponding flow rate regulating is performed on the reservoir according to the target discharge flow rate.

Specifically, corresponding flow rate regulating is performed on the reservoir to reach the target biogenic element concentration on the basis of the constraint condition of the discharge flow rate of the reservoir and according to the target discharge flow rate determined in the above embodiment.

Based on the above embodiments, as an implementation manner, the step that the flow rate regulating guidance model of the reservoir is built based on the historical monitoring data in an embodiment includes:

step 2021: fitting a water flow continuity equation of the hydraulic engineering regulating area according to water flow continuity information represented by the historical monitoring data;

step 2022: fitting a water flow motion equation of the hydraulic engineering regulating area according to the water flow continuity equation and water flow hydrodynamics information represented by the historical monitoring data;

step 2023: fitting a solute retention equation of the hydraulic engineering regulating area according to the water flow continuity equation, the water flow motion equation and solute retention information represented by the historical monitoring data; and

step 2024: building the flow rate regulating guidance model of the reservoir based on the water flow continuity equation, the water flow motion equation and the solute retention equation.

It should be noted that, because the hydraulic engineering regulating area has a complex environment, including the reservoir and the river basin, in order to adapt to different application environments, an embodiment of the present application provides two flow rate regulating guidance models, namely a one-dimensional flow rate regulating guidance model and a two-dimensional flow rate regulating guidance model. The one-dimensional flow rate regulating guidance model is suitable for the case of the large coverage area of the hydraulic engineering regulating area, and the two-dimensional flow rate regulating guidance model is suitable for the case of the small coverage area of the hydraulic engineering regulating area.

Specifically, in an embodiment, for the building of the one-dimensional flow rate regulating guidance model, the water flow continuity information represented by the historical monitoring data is used to fit the following water flow continuity equation of the hydraulic engineering regulating area:

$$\frac{\partial Q}{\partial x} + B\frac{\partial Z}{\partial t} = q_l$$

wherein x represents the on-way position coordinates of a riverway, Q represents the discharge flow rate of a corresponding section, $t$ represents occurrence time, Z represents water level, B represents a water surface width, $q_l$ represents the side inflow rate per unit length of the river, and the water flow continuity information includes the on-way position coordinates of the riverway, the discharge flow rate, the occurrence time, the water level, the water surface width and the side inflow rate per unit length of the river.

The water flow continuity equation and the water flow hydrodynamics information represented by the historical monitoring data are used to fit the following water flow motion equation of the hydraulic engineering regulating area:

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

wherein A represents the water-passing area of a section, $R$ represents the hydraulic radius of the section, $C$ represents a Chezy coefficient, g represents gravitational acceleration, $U_l$ represents a component of the average flow velocity of the side inflow section along a riverway direction, and the water flow hydrodynamics information includes the water-passing area of the section, the hydraulic radius of the section and the component of the average flow velocity of the side inflow section along the riverway direction.

The water flow continuity equation, the water flow motion equation and the solute retention information represented by the historical monitoring data are used to fit the following solute retention equation of the hydraulic engineering regulating area:

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

wherein $C_s$ represents the biogenic element concentration of the reservoir, c represents the biogenic element concentration of the side inflow, v represents the flow velocity of the water flow, D represents a diffusion coefficient, R represents a chemical reaction rate, K represents an adsorption-desorption coefficient, and the solute retention information includes the biogenic element concentration of the reservoir, the biogenic element concentration of the side inflow and the flow velocity of the water flow. The chemical reaction rate R is affected by water temperature, the adsorption-desorption coefficient K is affected by the water level and the flow rate, $K=\alpha(Q_{inflow}-Q_{outflow})$, wherein $\alpha$ is an adsorption rate, and $Q_{outflow}$ is the discharge flow rate.

Specifically, in an embodiment, a parameter adsorption rate $\alpha$ may be calibrated by using a neural network, and the network construction is as follows.

A loss function $L(\alpha)$ of the adsorption rate $\alpha$ is obtained by using a feedforward neural network function and the following formula:

$$L(\alpha) = \frac{1}{n}\sum_{i=1}^{n}[C_{NN}(x,t,\alpha) - C(x,t)]$$

wherein $n$ is the number of the historical monitoring data, $C_{NN}$ represents the feedforward neural network function, and $C(x,t)$ represents the historical monitoring data. A minimum value $minL(\alpha)$ of the loss function $L(\alpha)$ is solved by a genetic algorithm, and the corresponding $\alpha$ is the solved parameter adsorption rate $\alpha$.

It should be noted that the one-dimensional flow rate regulating guidance model built in the embodiment of the present application may be referred to as a one-dimensional biogenic element transportation-retention model, and may be used to describe the transportation and retention process of biogenic elements along the flow direction.

Further, in an embodiment, the target biogenic element concentration, which serves as $C_s$, and the current monitoring data are input into the flow rate regulating guidance model to obtain the discharge flow rate Q output by the flow rate regulating guidance model; and the discharge flow rate Q output by the flow rate regulating guidance model is determined as the target discharge flow rate of the reservoir.

Specifically, the flow rate regulating guidance model may calculate the target discharge flow rate required for reaching the target biogenic element concentration under the current working condition according to the target biogenic element concentration and various current working condition indicators included in the current monitoring data.

Specifically, in an embodiment, for the building of the two-dimensional flow rate regulating guidance model, the water flow continuity information represented by the historical monitoring data is used to fit the following water flow continuity equation of the hydraulic engineering regulating area:

$$\frac{\partial Z}{\partial t} + \frac{\partial(hU)}{\partial x} + \frac{\partial(hV)}{\partial z} = q_l$$

wherein x represents the on-way position coordinates of the riverway, $t$ represents occurrence time, $z$ represents the on-way vertical-direction position coordinates of the riverway, $Z$ represents water level, $h$ represents water depth, $U$ and $V$ respectively represent the longitudinal average flow velocity and the vertical average flow velocity corresponding to the water depth $h$, $q_l$ represents the side inflow rate per unit length of the river, and the water flow continuity information includes the on-way position coordinates of the riverway, the occurrence time, the water level, the water depth, the longitudinal average flow velocity, the vertical average flow velocity and the side inflow rate per unit length of the river.

The water flow continuity equation and the water flow hydrodynamics information represented by the historical monitoring data are used to fit the following water flow motion equations of the hydraulic engineering regulating area:

$$\frac{\partial(hU)}{\partial t} + \frac{\partial(hU^2)}{\partial x} + \frac{\partial(hUV)}{\partial z}$$

$$= -gh\left(\frac{\partial Z}{\partial x}v_t\left(\frac{\partial^2(hU)}{\partial x^2} + \frac{\partial^2(hU)}{\partial z^2}\right) + \frac{n^2 U\sqrt{U^2+V^2}}{h^{\frac{2}{3}}}\right)$$

$$+ q_l U_l$$

$$\frac{\partial(hV)}{\partial t} + \frac{\partial(hUV)}{\partial x} + \frac{\partial(hV^2)}{\partial z}$$

$$= -gh\left(\frac{\partial Z}{\partial x}v_t\left(\frac{\partial^2 hV}{\partial x^2} + \frac{\partial^2 hV}{\partial z^2}\right) + \frac{n^2 V\sqrt{U^2+V^2}}{h^{\frac{2}{3}}}\right) + q_l v_l$$

wherein $U_l$ represents a component of the average flow velocity of the side inflow section along the riverway direction, $v_l$ represents a component of the average flow velocity of the side inflow section along the riverway vertical direction, $n$ represents a Manning roughness coefficient, $V_t$ represents a turbulence viscosity coefficient, and the water flow hydrodynamics information includes the component of the average flow velocity of the side inflow section along the riverway direction and the component of the average flow velocity of the side inflow section along the riverway vertical direction.

The water flow continuity equation, the water flow motion equation and the solute retention information represented by the historical monitoring data are used to fit the following solute retention equation of the hydraulic engineering regulating area:

$$\frac{\partial(hC_s)}{\partial t} + \frac{\partial(hUC_s)}{\partial x} + \frac{\partial(hVC_s)}{\partial z} = D_x\frac{\partial^2(hC_s)}{\partial x^2} + D_z\frac{\partial^2(hC_s)}{\partial z^2} - RhC_s - KhC_s + cq_l$$

where $C_s$ represents the biogenic element concentration of the reservoir, c represents the biogenic element concentration of the side inflow, $D_x$ represents a diffusion coefficient in the riverway on-way direction, $D_z$ represents the diffusion coefficient in the riverway on-way vertical direction, $R$ represents a chemical reaction rate, $K$ represents an adsorption-desorption coefficient, and the solute retention information includes the biogenic element concentration of the reservoir and the biogenic element concentration of the side inflow.

It should be noted that all coefficients used for building the flow rate regulating guidance model of the embodiments of the present application are calibrated by model training, and the two-dimensional flow rate regulating guidance model may also be referred to as a transportation-exchange model.

Further, in an embodiment, the target biogenic element concentration, which serves as $C_s$, and the current monitoring data are input into the flow rate regulating guidance model to obtain the longitudinal average flow velocity $t7$ corresponding to the current water depth output by the flow rate regulating guidance model; and the target discharge flow rate of the reservoir is determined according to the longitudinal average flow velocity $t7$ and the water-passing area of the section of the reservoir.

It should be noted that the discharge flow rate of the reservoir is the flow rate of the reservoir at a dam section, and the relevance and sensitivity of model parameters may be analyzed after the above model is built so as to provide a basis for targeted optimization of the flow rate regulating guidance model in the later stage.

Specifically, the longitudinal average flow velocity $t7$ corresponding to the target biogenic element concentration and the current monitoring data may be determined based on the two-dimensional flow rate regulating guidance model, and then the target discharge flow rate $Q=U*A$ of the reservoir may be determined according to the water-passing area $A$ of the dam section and the longitudinal average flow velocity $U$ of the reservoir.

Based on the above embodiments, the historical monitoring data of the hydraulic engineering regulating area directly affects the calculation accuracy of the flow rate regulating guidance model, so that in order to further improve the scheduling accuracy of the reservoir flow rate, as an implementation manner, based on the above embodiments, the step that the historical monitoring data of the hydraulic engineering regulating area is acquired in an embodiment includes:

step 2011: acquiring monitoring data of the hydraulic engineering regulating area based on fixed layered monitoring devices and layered monitoring devices carried by a monitoring ship;

step 2012: detecting the integrity of the monitoring data to obtain an integrity monitoring result of the monitoring data; and

step 2013: supplementing missing values of the monitoring data according to the integrity monitoring result of the monitoring data so as to obtain historical monitoring data of the hydraulic engineering regulating area.

It should be noted that the layered monitoring phenomenon of the biogenic elements in a reservoir area may be monitored by using fixed layered monitoring devices and layered monitoring devices carried by a monitoring ship. According to the distribution characteristics of annual precipitation, a continuous layered monitoring devices are additionally arranged on a preset key investigation section in a period (such as a flood period) with concentrated annual precipitation and large precipitation and are removed in the rest months to be changed into manual sampling detection of the monitoring ship, wherein the sampling frequency may be 4 times per month; and in other periods, in the case of sudden heavy precipitation weather, the manual sampling detection of the monitoring ship may be temporarily encrypted depending on the situation after precipitation, thereby ensuring safety first. Meanwhile, a GIS remote sensing technology is used to assist in monitoring.

Exemplarily, in order to perform the subsequent research work, a database may be built by a data cleaning method:

step 1: a fixed layered monitoring device is set up after a certain monitoring location is selected, and if the fixed layered monitoring device is present, historical water quality data at this location is collected for a related environmental protection department;

step 2: the integrity of annual historical data (monitored) at the monitoring location in recent years is evaluated;

step 3: when the integrity is relatively high, data loss is present in only a small part of time, and a small number of missing values may be complemented based on data cleaning methods such as statistical analysis interpolation and noise addition;

step 4: when the integrity is relatively low, supplementary monitoring needs to be performed, and continuous sampling is performed in the missing months or seasons to form a complete monitoring database with the existing historical data;

step 5: the presence of continuous rainfall in some time points results in the incapability of distinguishing data before and after precipitation, which is processed as the missing data, and the missing data is complemented by the method in step 3 based on the data loss situation before precipitation;

step 6: the daily precipitation situation is distinguished according to precipitation data, and a precipitation condition label is marked on each piece of data; and

step 7: a database of "date-precipitation amount-concentration before precipitation-concentration after precipitation-precipitation condition" is built with the requirement of the accuracy of precipitation amount data being daily precipitation amount, which is mostly acquired from related meteorological departments and existing public databases by using conventional acquisition methods.

The method for detecting the integrity of the monitoring data mainly includes analysis in the two aspects: for the list integrity, whether null values or non-numerical characters are present in lists of water quality data or precipitation amount data is investigated, and the proportion of the null values and the non-numerical characters in the total data amount are mainly investigated; and for the row integrity, whether the data amount of the current month is consistent with the actual number of days of the current month, and the proportion of days with the data record in the actual number of days in the current month is mainly investigated. The row integrity indicator $I_{row}$ and the list integrity indicator $I_{list}$ may be used to evaluate:

$$I_{row} = \frac{n_{NaN} + n_{non}}{n_{row}}$$

$$I_{list} = \frac{n_{list}}{n_{month}}$$

wherein $n_{NaN}$ refers to the number of null values in the list, $n_{non}$ refers to the $n_{row}{}^{1t}list$ number of non-numerical characters in the list, and is the total number of data in the list. is the data amount recorded on the current day in one month, and $n_{month}$ is the actual number of days in the current month. When the row integrity indicator $I_{row}$ and the list integrity indicator $I_{list}$ are not less than 0.6, the missing value may be complemented by a missing data complementing method. When the row integrity indicator $I_{row}$ or the list integrity indicator $I_{list}$ is less than 0.6, monitoring and sampling are performed according to the situation of the current month.

The missing data complementing method provided by the embodiment of the present application is used to complement the data missing value mainly when the data integrity indicators are not less than 0.6, and the complementing objects mainly include water quality data of surface water before and after precipitation. Differential treatment is required due to the difference in time domain distribution of the water quality data of the surface data before and after precipitation.

Specifically, for the water quality data of the surface water before precipitation, an n-order polynomial function based on existing data before precipitation is built according to the time domain distribution characteristic, the independent variable of the function is time, and the domain of definition of the function is a neighborhood of the time point where the missing value is located. A Newton interpolation basis function is adopted. If interpolation nodes are $x_0, x_1,..., x_n$, it is shown in the following formula:

$$\begin{cases} \varphi_0(x) = 1 \\ \varphi_1(x) = (x - x_0) \\ \varphi_2(x) = (x - x_0)(x - x_1) \\ \quad \cdots \\ \varphi_n(x) = (x - x_0)(x - x_1)\ldots(x - x_n) \end{cases}$$

Further, an interpolation polynomial function is built:

$$p_n(x) = \sum_{k=0}^{n} \alpha_k \varphi_k$$

where $\alpha_k$ is a k-order mean deviation of the following function $f(x)$ about the nodes $x_0, x. \ldots, x_n$

$$\begin{cases} f[x_i, x_j] = \dfrac{f(x_i) - f(x_j)}{x_i - x_j} \\ f[x_i, x_j, x_k] = \dfrac{f[x_i, x_j] - f[x_j, x_k]}{x_i - x_k} \\ f[x_0, x_1, \ldots, x_k] = \dfrac{f[x_0, x_1, \ldots, x_{k-1}] - [x_1, x_1, \ldots, x_k]}{x_0 - x_k} \end{cases}$$

The above are sequentially a first-order mean deviation, a second-order mean deviation and a third-order mean deviation.

If the integrity of the monitoring data is high, fewer locations are required to be subjected to interpolation, and an interpolation method coupling simple first-order linear interpolation with Gaussian noise may be adopted. It is known that the neighborhood of an interpolation location x includes two endpoints, namely $(x_1, y_1)$ and $(x_2, y_2)$, then according to the first-order linear interpolation method, the function value y at the interpolation location x may be calculated according to the following formula:

$$y = y_0 + \Delta y$$

wherein $y_0$ is a function value of the first-order linear function at $x_0$ in the domain, $\Delta y$ takes $y_0$ as a mean value, $0.25y_0$ is random noise generated by Gaussian distribution of a mean square error, and $y_0$ and $\Delta y$ may be specifically calculated according to the following formulas:

$$y_0 = y_1 + \frac{y_2 - y_1}{x_2 - x_1}(x - x_1)$$

$$\Delta y = \sqrt{-2(0.25y_0)^2 * ln(r * \sqrt{2\pi} * 0.25 * y_0)}$$

wherein r is a random number between 0 and 1.

Further, data labels may be added to each piece of historical monitoring data, the added data labels are divided into no precipitation, light rain, moderate rain, heavy rain and above according to the precipitation amount, upstream discharge is divided according to the discharge flow rate, and the data label is marked respectively for each piece of monitoring data. For a general reservoir, division is performed according to no precipitation, light rain (0-20 mm), moderate rain (20-45 mm), heavy rain and above (45 mm and above), below 10000$m^3$/s, and above 10000-20000 $m^3$/s, 20000-40000 $m^3$/s and 40000 $m^3$/s.

Based on the above embodiments, as an implementation manner, the target biogenic element concentration of the reservoir may be determined according to the following mode.

Step 301, an eutrophication risk evaluation model of the reservoir is built, and a target biogenic element concentration meeting the requirement of water bloom prevention and control is determined according to the current monitoring data based on the eutrophication risk evaluation model.

Specifically, a riverway type reservoir three-dimensional hydrodynamic water quality model is built according to the monitoring results of the comprehensive monitoring system of the biogenic elements, the water quality and the biogenic element concentration of the reservoir area under different discharge flow rates are simulated, and the eutrophication situation of the riverway type reservoir is evaluated and analyzed by using a comprehensive trophic level index (TLI). A three-dimensional hydrodynamic water quality model in a research area is coupled, the eutrophication risk evaluation model is built, and the nutritional state of the reservoir area under the biogenic element change condition is simulated. Based on the continuous monitoring of the contents of different forms of biogenic elements and chlorophyll in surface water entering, exiting and being in the reservoir, the changes of water quality and compositions of phytoplankton communities are simulated under the current operation water level and flow field conditions of the reservoir area so as to predict the biogenic elements and the eutrophication risk of the reservoir area under different incoming water conditions and different discharge flow rates, and the range and duration of the eutrophication risk are comprehensively considered, so as to determine the range of the biogenic element concentration for preventing and controlling the eutrophication risk of the reservoir area, that is, the target biogenic element concentration, so that the range of the discharge flow rate of the corresponding reservoir is determined.

Specifically, in an embodiment, a food web stability evaluation model may be built for the determination of the target biogenic element concentration, and the target biogenic element concentration meeting the downstream ecological demands is determined according to the current monitoring data based on the food web stability evaluation model.

Specifically, the downstream riverway of the reservoir may be taken as a research area, and the current water ecological status and key protected objects in the research area are sorted out in combination with historical data. A relationship between biological parameters and biogenic elements is fitted by a locally weighted scatterplot smoothing method (nonparametric regression method) to uncover the influence on the primary productivity, diversity of species and the community structure after the biogenic element supply changes. A food web stability evaluation model in the research area is built by Ecopath software, and the changes of the structure and the functional characteristics of the water ecological system in the research area are reflected through the indicators such as a system connection index and a system omnivorous index. The change of the biogenic elements and the stability of the aquatic ecosystem under different discharge flow rate schemes and scenarios are predicted based on the above three-dimensional hydrodynamic water quality model, and the range of the biogenic element concentration required by biogenic element scheduling and meeting the downstream ecological demands is met, that is, the target biogenic element concentration, so that the range of the discharge flow rate of the corresponding reservoir is determined.

Based on the above embodiments, as an implementation manner, the step that corresponding flow rate regulating is performed on the reservoir according to the target discharge flow rate includes:

step 2051: performing corresponding flow rate regulating on the reservoir according to the target discharge flow rate by taking the flow rate requirements of flood control, shipping and power generation as the constraint conditions of the discharge flow rate of the reservoir.

Specifically, multiple targets are coupled through time and priority by taking flood control as constraint and river ecological health as a target. The coupling principle is that a priority is given to main functions, and the coupling is performed according to the actual scheduling demands of the river. The main considerations for establishing the multi-target optimal scheduling model is shown in Table 1.

Table 1 Hydraulic engineering ecological scheduling target parameters

| Benefit Division | Scheduling Target | Parameter |
|---|---|---|
| Society | Flood control | Reservoir flood control water level |
| | Water resource demand | Reservoir capacity in the final scheduling period |
| Economy | Capacity | Output |
| | Electric quantity | Generating capacity |
| Ecology | Basic demand of the basin | Ecological basic flow |
| | Demand of biogenic elements | Runoff process meeting the demand of biogenic elements |
| | Demand of biological resources | Artificial flood pulse |

In the case of determining the predicted inflow, the maximal total power generation amount of hydraulic engineering is taken as a target so as to establish an ecological scheduling model based on the runoff process meeting the demands of the biogenic elements:

$$obj = \max E_{total} = \max \sum_{i=1}^{M} \sum_{t=1}^{T} P_t^i \tau_t$$

wherein $i$ represents a power station $i$, $t$ represents a period $t$, $E_{total}$ represents the total power generation amount of a cascade power station, and represents output of the power station z at the time. The constraint condition is as follows.

(1) Water balance equation

$$V_{i,j+1} = V_{i,j} + \left( Q_{i,j} - q_{i,j} - Q_{loss\,i,j} \right)$$

wherein $V_{i,j}$ represents the water storage amount of the $i$th power station in the $j$th period; $V_{i,j+1}$ represents the water storage amount of the $i$th power station in the ($j$+1)th period; $Q_{i,j}$ represents the incoming flow rate of the $i$th power station in the $j^{th}$ period; $q_{i,j}$ represents the discharge flow rate of the $i^{th}$ power station in the $j^{th}$ period; and $Q_{lossi,j}$ represents the deducted flow rate of the $i^{th}$ power station in the $j^{th}$ period.

(2) Water level constraint of the power station

$$\underline{Z_t} \leq Z_t \leq \overline{Z_t}$$

wherein $Z_t$ is the water level of the power station in the $t^{th}$ period; $\underline{Z_t}$ represents the minimum water storage amount of the reservoir that needs to be ensured in the $t^{th}$ period; and $\overline{Z_t}$ represents the maximum water storage amount (such as flood control restriction in the flood season) of the reservoir that is allowed in the $t^{th}$ period.

(3) The output constraint of the power station

$$\underline{P_t} \leq P_t \leq \overline{P_t}$$

wherein $P_t$ is the average output of the power station in the $t^{th}$ period; $\underline{P_t}$ is the minimum power generation output that is allowed by the power station in the $t^{th}$ period; and $\overline{P_t}$ is the maximum power generation output that is allowed by the power station in the $t^{th}$ period, and cannot be higher than the .

The ecological scheduling model established above is used to perform ecological scheduling for the demands of the biogenic elements, and the scheduling period is the whole year divided into three incoming water years (high, normal and low). The target discharge flow rate corresponding to the biogenic elements meeting the stability of the water ecological system may be derived based on the above embodiments, and the solution algorithm adopts a global optimization-based discrete differential dynamic programming method. Finally, the ecological scheduling schemes under different scenarios are proposed in combination with the guaranteed output damage situation, upper and lower limits of the ecological runoff damage situation and the ecological evaluation indicator preference so as to seek an ecological scheduling scheme that can balance the economic, social and ecological benefits.

Based on the above embodiments, as an implementation manner, in an embodiment, after corresponding flow rate regulating is performed on the reservoir according to the target discharge flow rate, the method further includes the following steps:

step 401: the restoration degree of the ecological environment of the reservoir is detected according to different time scales by a local Hurst index to obtain a detection result of the restoration degree of the ecological environment of the reservoir; and

step 402: a flow rate regulating guidance model is optimized or rebuilt according to the detection result of the restoration degree of the ecological environment of the reservoir.

Specifically, the ecological restoration status of the hydraulic engineering regulating area may be analyzed according to the subsequently collected monitoring data, providing the ecological restoration coefficient of the area; and a Pearson related coefficient (r) of each biogenic element indicator has extremely significant moderate relevance ($0.8 > |r| \geq 0.5$, $p < 0.01$) indicator, and has significantly low relevance ($0.5 > |r| \geq 0.3$, $p < 0.05$) indicator.

(1) Single-factor biogenic element index method

The single-factor biogenic element index ($P_i$) may be used to represent whether each biogenic element indicator reaches the requirement of a corresponding standard.

$$P_i = \frac{C_i}{C_0}$$

wherein $C_i$ is a concentration measuring value of an $i^{th}$ indicator, and $C_0$ is a standard limit value of the $i^{th}$ indicator. If $P_i \leq 1$, it indicates that the biogenic element concentration is relatively low; and if $P_i > 1$, it indicates that the biogenic element concentration is relatively high. At this point, the occurrence of the ecological disasters such as water bloom needs to be evaluated in combination with the actual temperature and other conditions.

(2) Mean biogenic element index method

The mean biogenic element index method may comprehensively evaluate the degree in which the biogenic element is rich in water according to arithmetic mean, weighted mean or other mathematical methods of the biogenic element index, and the expression of the mean comprehensive index ($P$) is as follows:

$$P = \frac{1}{n}\sum_{i=1}^{n} P_i$$

wherein $P_i$ is the single-factor biogenic element index, and $n$ is the number of indicators participating in evaluation. If $P \leq 0.20$, it indicates that the biogenic element content is low; if $0.20 < P \leq .40$, the biogenic element content is relatively low; if $0.40 < P \leq 0.70$, the biogenic element content is moderate; $0.70 < P \leq 1.00$, the biogenic element content is relatively high; if $1.00 < P \leq 2.00$, the biogenic element content is high and there is a risk of water bloom; and if $P > 2.00$, the biogenic element content is extremely high.

(3) Nemerow comprehensive biogenic element index method

The Nemerow comprehensive biogenic element index ($I$) may highlight the maximum, taking the mean value and the maximum of the single-factor biogenic element index into consideration. The expression is as follows:

$$I = \sqrt{\frac{P^2 + P_{i,max}^2}{2}}$$

In the formula: P is the mean comprehensive biogenic element index, and $P_{i,max}^2$ is the maximum of the single-factor pollution indexes. If $I \leq 1$, it indicates that the biogenic element content is relatively low; if $1 < I \leq 2$, the biogenic element content is moderate; if $2 < I \leq 3$, the biogenic element content is relatively high; if $3 < I \leq 5$, the biogenic element content is high and there is a risk of water bloom; and if $I > 5$, the biogenic element content is extremely high.

Further, the biogenic element regulating effect in the ten-day, month and year time scale may be analyzed through a local Hurst index, and the relevance with the river ecological restoration may be analyzed. The calculation formulas of the local Hurst index (H) are as follows:

$$F(S) \approx S^H$$

$$\gamma(j) = \sum_{k=1}^{i} [X_k - \langle x \rangle]$$

$$F_{v,s}^2(S) = \frac{1}{S} \sum_{j=1}^{s} \left( \gamma(j) - P_{v,s}^n(j) \right)^2$$

$$F(S) = \left[ \frac{1}{v} \sum_{k=1}^{N_s} F_{v,s}^2(S) \right]^{0.5}$$

wherein $N$ is the total number of monitoring data locations, $S$ is the equant number of a data set and the data set is equally divided respectively according to day, week, month and year, $N_s$ is the point number of each section $N_s = N/S$, $v$ is an integer, $1 < v < N_s$, $X_k$ is the value of the $k^{th}$ data, $\langle x \rangle$ is the mean value of the local data set, and $P_{v,s}^n$ is n-order polynomial fitting.

Further, the local Hurst index (H) is obtained by the above formula, and $0.5 < H < 1.5$ indicates that the biogenic element scheduling effect is obvious, that is, the current flow rate regulating guidance model has high performance, otherwise, it is considered that the performance is poor, and optimization or rebuilding is required. If $0.75 < H < 1.25$, it is considered that scheduling has a more favorable influence on the downstream biogenic elements.

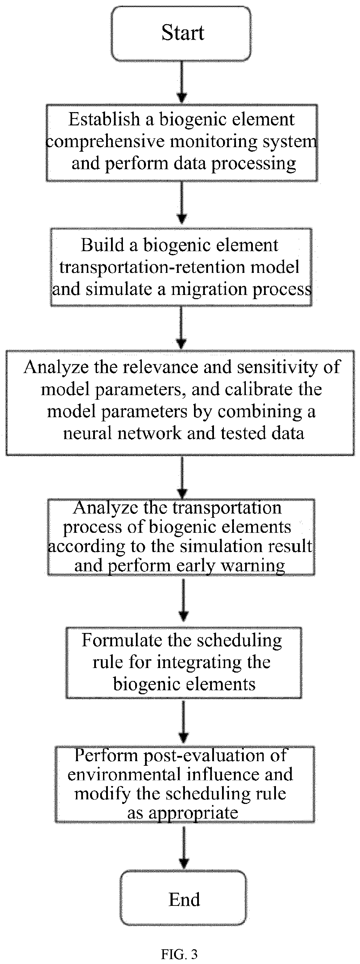

Exemplarily, as shown in FIG. 3, which is a schematic diagram of an overall process of exemplary reservoir flow rate regulating provided by an embodiment of the present application, the method shown in FIG. 3 is an exemplary implementation manner of the method shown in FIG. 2, the two methods have the same implementation principle, which will not be described in detail.

The embodiments of the present application provide the reservoir flow rate regulating method. The method includes: acquiring the historical monitoring data of the hydraulic engineering regulating area, wherein the historical monitoring data is used to represent the water quality information of the reservoir in the hydraulic engineering regulating area under different working condition indicators, and the water quality information includes the biogenic element concentration; building the flow rate regulating guidance model of the reservoir based on the historical monitoring data, wherein the flow rate regulating guidance model is coupled with the relationship between the biogenic element concentration and each working condition indicator; acquiring the current monitoring data and the target biogenic element concentration of the hydraulic engineering regulating area; determining the target discharge flow rate of the reservoir according to the current monitoring data and the target biogenic element concentration based on the flow rate regulating guidance model; and performing corresponding flow rate regulating on the reservoir according to the target discharge flow rate. According to the method provided by the above solution, the reservoir flow rate regulating guided by the biogenic element concentration is realized by building the flow rate regulating guidance model coupled with the relationship between the biogenic element concentration and each working condition indicator, which effectively protects the ecological environment of the reservoir basin.

The reservoir flow rate regulating method provided by the embodiments of the present application is to establish a comprehensive regulating scheme and method for the comprehensive influence of engineering operation on the river runoff process and the biogenic element migration conversion on the basis of establishing the comprehensive monitoring system for the biogenic elements and water ecology, from two aspects of ensuring the biogenic element content and the stability of the food web of the water ecological system required by aquatic organisms and in combination with the exertion of the comprehensive functions of engineering flood control, power generation and water supply, and the implementation effect is monitored, evaluated and further optimized. The proposed comprehensive regulating method has an important significance on promoting water ecological environment protection and sustainable development of hydraulic engineering.

An embodiment of the present application provides a reservoir flow rate regulating apparatus, for performing the reservoir flow rate regulating method provided by the above embodiments.

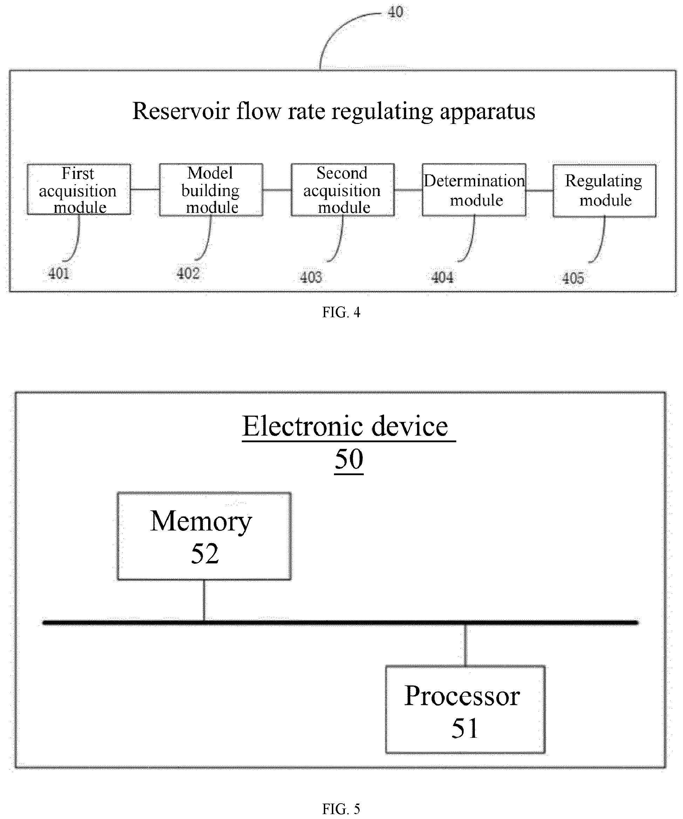

As shown in FIG. 4, FIG. 4 is a structural schematic diagram of a reservoir flow rate regulating apparatus provided by an embodiment of the present application. The reservoir flow rate regulating apparatus 40 includes: a first acquisition module 401, a model building module 402, a second acquisition module 403, a determination module 404 and a regulating module 405.

The first acquisition module is configured to acquire historical monitoring data of a hydraulic engineering regulating area, wherein the historical monitoring data is used to represent water quality information of the reservoir in the hydraulic engineering regulating area under different working condition indicators, and the water quality information includes a biogenic element concentration; the model building model is configured to build a flow rate regulating guidance model of the reservoir based on the historical monitoring data, wherein the flow rate regulating guidance model is coupled with a relationship between the biogenic element concentration and each working condition indicator; the second acquisition module is configured to acquire current monitoring data and a target biogenic element concentration of the hydraulic engineering regulating area; the determination module is configured to determine a target discharge flow rate of the reservoir according to the current monitoring data and the target biogenic element concentration based on the flow rate regulating guidance model; and the regulating module is configured to perform corresponding flow rate regulating on the reservoir according to the target discharge flow rate.

Specifically, in an embodiment, the model building module is specifically configured to:

fit a water flow continuity equation of the hydraulic engineering regulating area according to water flow continuity information represented by the historical monitoring data;

fit a water flow motion equation of the hydraulic engineering regulating area according to the water flow continuity equation and water flow hydrodynamics information represented by the historical monitoring data;

fit a solute retention equation of the hydraulic engineering regulating area according to the water flow continuity equation, the water flow motion equation and solute retention information represented by the historical monitoring data; and

build the flow rate regulating guidance model of the reservoir based on the water flow continuity equation, the water flow motion equation and the solute retention equation.

Specifically, in an embodiment, the model building module is specifically configured to:

use the water flow continuity information represented by the historical monitoring data to fit the following water flow continuity equation of the hydraulic engineering regulating area:

$$\frac{\partial Q}{\partial x} + B\frac{\partial Z}{\partial t} = q_l$$

wherein x represents the on-way position coordinates of a riverway, Q represents the discharge flow rate of a corresponding section, $t$ represents occurrence time, Z represents water level, $B$ represents a water surface width, $q_l$ represents the side inflow rate per unit length of the river, and the water flow continuity information includes the on-way position coordinates of the riverway, the discharge flow rate, the occurrence time, the water level, the water surface width and the side inflow rate per unit length of the river;

use the water flow continuity equation and the water flow hydrodynamics information represented by the historical monitoring data to fit the following water flow motion equation of the hydraulic engineering regulating area:

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

wherein A represents the water-passing area of a section, R represents the hydraulic radius of the section, C represents a Chezy coefficient, g represents gravitational acceleration, $U_l$ represents a component of the average flow velocity of the side inflow section along a riverway direction, and the water flow hydrodynamics information includes the water-passing area of the section, the hydraulic radius of the section and the component of the average flow velocity of the side inflow section along the riverway direction; and

use the water flow continuity equation, the water flow motion equation and the solute retention information represented by the historical monitoring data to fit the following solute retention equation of the hydraulic engineering regulating area:

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

wherein $C_s$ represents the biogenic element concentration of the reservoir, c represents the biogenic element concentration of the side inflow, v represents the flow velocity of the water flow, D represents a diffusion coefficient, R represents a chemical reaction rate, K represents an adsorption-desorption coefficient, and the solute retention information includes the biogenic element concentration of the reservoir, the biogenic element concentration of the side inflow and the flow velocity of the water flow.

Specifically, in an embodiment, the model building module is specifically configured to:

use the water flow continuity information represented by the historical monitoring data to fit the following water flow continuity equation of the hydraulic engineering regulating area:

$$\frac{\partial Z}{\partial t} + \frac{\partial (hU)}{\partial x} + \frac{\partial (hV)}{\partial z} = q_l$$

wherein x represents the on-way position coordinates of the riverway, t represents occurrence time, z represents the on-way vertical-direction position coordinates of the riverway, Z represents water level, *h* represents water depth, *t7* and V respectively represent the longitudinal average flow velocity and the vertical average flow velocity corresponding to the water depth *h, q_l* represents the side inflow rate per unit length of the river, and the water flow continuity information includes the on-way position coordinates of the riverway, the occurrence time, the water level, the water depth, the longitudinal average flow velocity, the vertical average flow velocity and the side inflow rate per unit length of the river;
use the water flow continuity equation and the water flow hydrodynamics information represented by the historical monitoring data to fit the following water flow motion equations of the hydraulic engineering regulating area:

$$\frac{\partial (hU)}{\partial t} + \frac{\partial (hU^2)}{\partial x} + \frac{\partial (hUV)}{\partial z}$$
$$= -gh\left(\frac{\partial Z}{\partial x}v_t\left(\frac{\partial^2 (hU)}{\partial x^2} + \frac{\partial^2 (hU)}{\partial z^2}\right) + \frac{n^2 U\sqrt{U^2+V^2}}{h^{\frac{2}{3}}}\right)$$
$$+ q_l U_l$$

$$\frac{\partial (hV)}{\partial t} + \frac{\partial (hUV)}{\partial x} + \frac{\partial (hV^2)}{\partial z}$$
$$= -gh\left(\frac{\partial Z}{\partial x}v_t\left(\frac{\partial^2 hV}{\partial x^2} + \frac{\partial^2 hV}{\partial z^2}\right) + \frac{n^2 V\sqrt{U^2+V^2}}{h^{\frac{2}{3}}}\right) + q_l v_l$$

wherein $U_l$ represents a component of the average flow velocity of the side inflow section along the riverway direction, $v_l$ represents a component of the average flow velocity of the side inflow section along the riverway vertical direction, n represents a Manning roughness coefficient, $v_t$ represents a turbulence viscosity coefficient, and the water flow hydrodynamics information includes the component of the average flow velocity of the side inflow section along the riverway direction and the component of the average flow velocity of the side inflow section along the riverway vertical direction; and

use the water flow continuity equation, the water flow motion equation and the solute retention information represented by the historical monitoring data to fit the following solute retention equation of the hydraulic engineering regulating area:

$$\frac{\partial (hC_s)}{\partial t} + \frac{\partial (hUC_s)}{\partial x} + \frac{\partial (hVC_s)}{\partial z} = D_x \frac{\partial^2 (hC_s)}{\partial x^2} + D_z \frac{\partial^2 (hC_s)}{\partial z^2} - RhC_s - KhC_s + cq_l$$

wherein $C_s$ represents the biogenic element concentration of the reservoir, c represents the biogenic element concentration of the side inflow, $D_x$ represents a diffusion coefficient in the riverway on-way direction, $D_z$ represents the diffusion coefficient in the riverway on-way vertical direction, R represents a chemical reaction rate, K represents an adsorption-desorption coefficient, and the solute retention information includes the biogenic element concentration of the reservoir and the biogenic element concentration of the side inflow.

Specifically, in an embodiment, the determination module is specifically configured to:

input the target biogenic element concentration, which serves as $C_s$, and the current monitoring data into the flow rate regulating guidance model to obtain the discharge flow rate Q output by the flow rate regulating guidance model; and

determine the discharge flow rate Q output by the flow rate regulating guidance model as the target discharge flow rate of the reservoir.

Specifically, in an embodiment, the determination module is specifically configured to:

input the target biogenic element concentration, which serves as $C_s$, and the current monitoring data into the flow rate regulating guidance model to obtain the longitudinal average flow velocity t7 output by the flow rate regulating guidance model; and

determine the target discharge flow rate of the reservoir according to the longitudinal average flow velocity t7 and the water-passing area of the section of the reservoir.

Specifically, in an embodiment, the first acquisition module is specifically configured to:

acquire monitoring data of the hydraulic engineering regulating area based on fixed layered monitoring devices and layered monitoring devices carried by a monitoring ship;

detect the integrity of the monitoring data to obtain an integrity monitoring result of the monitoring data; and

supplement missing values of the monitoring data according to the integrity monitoring result of the monitoring data to obtain historical monitoring data of the hydraulic engineering regulating area.

With regard to the reservoir flow rate regulating apparatus in the embodiment, the specific manners in which various modules perform operations have been described in detail in the embodiments relating to the methods, and details are not described herein.
The embodiments of the present application provide a flow rate regulating apparatus, for performing the reservoir flow rate regulating method provided by the above embodiments, and the implementation manner and principle are the same and will not be elaborated.
An embodiment of the present application provides an electronic device, for performing the reservoir flow rate regulating method provided by the above embodiments, which is not described in detail.
FIG. 5 is a structural schematic diagram of an electronic device provided by an embodiment of the present application. The electronic device 50 includes: at least one processor 51 and a memory 52.
The memory stores computer-executable instructions; and the at least one processor executes the computer-executable instructions stored in the memory to cause the at least one processor to perform the reservoir flow rate regulating method provided by the above embodiments.

The electronic device provided by the embodiment of the present application is configured to perform the reservoir flow rate regulating method provided by the above embodiments, and the implementation manner and principle are the same and will not be described in detail.

An embodiment of the present application provides a computer-readable storage medium; the computer-readable storage medium stores computer-executable instructions; and the computer-executable instructions can be executed by a processor to perform the reservoir flow rate regulating method provided by any one of the above embodiments.

The storage medium including the computer-executable instructions provided by the embodiment of the present application may be configured to store the computer-executable instructions of the reservoir flow rate regulating method provided by the above embodiments, and the implementation manner and principle are the same and will not be described in detail.

In the several embodiments provided in the present application, it should be understood that the disclosed apparatus and method may be implemented in other manners. For example, the apparatus embodiment described above is only illustrative. For example, the division of the units is only logical function division. There may be other division manners in actual implementation, for example, a plurality of units or components may be combined or integrated into other systems, or some features may be ignored or not implemented. In other respects, the intercoupling or direct coupling or communication connection shown or discussed may be indirect coupling or communication connection through some interfaces, apparatuses, or units, or may be implemented in electrical, mechanical, or other forms.

The units described as separate parts may or may not be physically separated, and parts displayed as units may or may not be physical units, may be located in one location, or may be distributed on a plurality of network units. Some or all of the units may be selected according to actual needs to achieve the objective of the solutions of the embodiments.

In addition, functional units in the embodiments of the present application may be integrated into one processing unit, or each of the units may exist alone physically, or two or more units are integrated into one unit. The foregoing integrated unit may be implemented either in the form of hardware or in the form of hardware and software functional units.

The integrated unit implemented in the form of software functional units may be stored in a computer-readable storage medium. The software functional units are stored in a storage medium and include a plurality of instructions for causing one computer device (which may be a personal computer, a server or a network device) or a processor to perform some of the steps of each embodiment method. The aforementioned storage medium includes various mediums that may store a program code, such as a USB flash disk, a mobile hard disk, a read-only memory (ROM), a random access memory (RAM), a magnetic disk, or an optical disk.

Those skilled in the art may clearly understand that for convenient and simple description, the division of the above functional modules is taken as an example for illustration. In practice application, the functions can be completed by distributing to different functions modules, that is, the internal structure of the device is divided into different functional modules to complete all or a part of the functions described above. The specific working process of the above apparatus may refer to the corresponding process in the above method embodiment, which will not be described in detail.

Finally, it should be noted that the foregoing embodiments are merely intended for describing the technical solutions of the present application, but not for limiting the present application. Although the present application is described in detail with reference to the foregoing embodiments, persons of ordinary skill in the art should understand that modifications may be still made to the technical solutions described in the foregoing embodiments or equivalent replacements are made to some or all technical features. However, these modifications or substitutions do not make the essence of the corresponding technical solutions depart from the scope of the technical solutions of the embodiments of the present application.

**Claims**

1. A reservoir flow rate regulating method, comprising:

acquiring historical monitoring data of a hydraulic engineering regulating area, wherein the historical monitoring data is used to represent water quality information of the reservoir in the hydraulic engineering regulating area under different working condition indicators, and **characterised in that**
the water quality information comprises a biogenic element concentration;
building a flow rate regulating guidance model of the reservoir based on the historical monitoring data, wherein, the flow rate regulating guidance model is coupled with a relationship between the biogenic element concentration and each working condition indicator;
acquiring current monitoring data and a target biogenic element concentration of the hydraulic engineering regulating area;

determining a target discharge flow rate of the reservoir according to the current monitoring data and the target biogenic element concentration based on the flow rate regulating guidance model; and

performing corresponding flow rate regulating on the reservoir according to the target discharge flow rate, wherein, the step of building the flow rate regulating guidance model of the reservoir based on the historical monitoring data comprises:

fitting a water flow continuity equation of the hydraulic engineering regulating area according to water flow continuity information represented by the historical monitoring data;

fitting a water flow motion equation of the hydraulic engineering regulating area according to the water flow continuity equation and water flow hydrodynamics information represented by the historical monitoring data;

fitting a solute retention equation of the hydraulic engineering regulating area according to the water flow continuity equation, the water flow motion equation and solute retention information represented by the historical monitoring data; and

building the flow rate regulating guidance model of the reservoir based on the water flow continuity equation, the water flow motion equation and the solute retention equation;

wherein, the step of fitting the water flow continuity equation of the hydraulic engineering regulating area according to the water flow continuity information represented by the historical monitoring data comprises:

using the water flow continuity information represented by the historical monitoring data to fit the following water flow continuity equation of the hydraulic engineering regulating area:

$$\frac{\partial Q}{\partial x} + B\frac{\partial Z}{\partial t} = q_l$$

wherein, $x$ represents the on-way position coordinates of a riverway, $Q$ represents the discharge flow rate of a corresponding section, $t$ represents occurrence time, $Z$ represents water level, $B$ represents a water surface width, $q_l$ represents the side inflow rate per unit length of the river, and the water flow continuity information comprises the on-way position coordinates of the riverway, the discharge flow rate, the occurrence time, the water level, the water surface width and the side inflow rate per unit length of the river;

wherein the step of fitting the water flow motion equation of the hydraulic engineering regulating area according to the water flow continuity equation and water flow hydrodynamics information represented by the historical monitoring data comprises:

using the water flow continuity equation and water flow hydrodynamics information represented by the historical monitoring data to the following water flow motion equation of the hydraulic engineering regulating area,

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

wherein, $A$ represents the water-passing area of a section, $R$ represents the hydraulic radius of the section, $C$ represents a Chezy coefficient, g represents gravitational acceleration, $U_l$ represents a component of the average flow velocity of the side inflow section along a riverway direction, and the water flow hydrodynamics information comprises the water-passing area of the section, the hydraulic radius of the section and the component of the average flow velocity of the side inflow section along the riverway direction;

wherein the step of fitting the solute retention equation of the hydraulic engineering regulating area according to the water flow continuity equation, the water flow motion equation and solute retention information represented by the historical monitoring data comprises:

using the water flow continuity equation, the water flow motion equation and the solute retention information represented by the historical monitoring data to fit the following solute retention equation of the hydraulic engineering regulating area:

$$\frac{\partial AC_s}{\partial t} = \frac{\partial v AC_s}{\partial x} + \frac{\partial}{\partial x}\left(DA\frac{\partial C_s}{\partial x}\right) - RAC_s - KAC_s + cq_l$$

wherein, $C_s$ represents the biogenic element concentration of the reservoir, $c$ represents the biogenic element concentration of the side inflow, $v$ represents the flow velocity of the water flow, $D$ represents a diffusion coefficient, $R$ represents a chemical reaction rate, $K$ represents an adsorption-desorption coefficient, and the solute retention information comprises the biogenic element concentration of the reservoir, the biogenic element concentration of the side inflow and the flow velocity of the water flow.

2. The method of claim 1, **characterized in that** the step of fitting the water flow continuity equation of the hydraulic engineering regulating area according to the water flow continuity information represented by the historical monitoring data comprises:

using the water flow continuity information represented by the historical monitoring data to fit the following water flow continuity equation of the hydraulic engineering regulating area:

$$\frac{\partial Z}{\partial t} + \frac{\partial (hU)}{\partial x} + \frac{\partial (hV)}{\partial z} = q_l$$

wherein, $x$ represents the on-way position coordinates of the riverway, $t$ represents occurrence time, $z$ represents the on-way vertical-direction position coordinates of the riverway, $Z$ represents water level, $h$ represents water depth, $U$ and $V$ respectively represent the longitudinal average flow velocity and the vertical average flow velocity corresponding to the water depth $h$, and $q_l$ represents the side inflow rate per unit length of the river, and the water flow continuity information comprises the on-way position coordinates of the riverway, the occurrence time, the water level, the water depth, the longitudinal average flow velocity, the vertical average flow velocity and the side inflow rate per unit length of the river;
the step of fitting the water flow motion equation of the hydraulic engineering regulating area according to the water flow continuity equation and the water flow hydrodynamics information represented by the historical monitoring data comprises:

using the water flow continuity equation and the water flow hydrodynamics information represented by the historical monitoring data to fit the following water flow motion equations of the hydraulic engineering regulating area:

$$\frac{\partial (hU)}{\partial t} + \frac{\partial (hU^2)}{\partial x} + \frac{\partial (hUV)}{\partial z}$$
$$= -gh\left(\frac{\partial Z}{\partial x}v_t\left(\frac{\partial^2 (hU)}{\partial x^2} + \frac{\partial^2 (hU)}{\partial z^2}\right) + \frac{n^2 U\sqrt{U^2 + V^2}}{h^{\frac{2}{3}}}\right)$$
$$+ q_l U_l$$

$$\frac{\partial (hV)}{\partial t} + \frac{\partial (hUV)}{\partial x} + \frac{\partial (hV^2)}{\partial z}$$
$$= -gh\left(\frac{\partial Z}{\partial x}v_t\left(\frac{\partial^2 hV}{\partial x^2} + \frac{\partial^2 hV}{\partial z^2}\right) + \frac{n^2 V\sqrt{U^2 + V^2}}{h^{\frac{2}{3}}}\right) + q_l v_l$$

wherein, $U_l$ represents a component of the average flow velocity of the side inflow section along the riverway direction, $v_l$ represents a component of the average flow velocity of the side inflow section along the riverway vertical direction, n represents a Manning roughness coefficient, $v_t$ represents a turbulence viscosity coefficient, g represents gravitational acceleration, and the water flow hydrodynamics information comprises the component of the average flow velocity of the side inflow section along the riverway direction and the component of the average flow velocity of the side inflow section along the riverway vertical direction;

the step of fitting the solute retention equation of the hydraulic engineering regulating area according to the water flow continuity equation, the water flow motion equation and the solute retention information represented by the historical monitoring data comprises:

using the water flow continuity equation, the water flow motion equation and the solute retention information represented by the historical monitoring data to fit the following solute retention equation of the hydraulic engineering regulating area:

$$\frac{\partial(hC_s)}{\partial t} + \frac{\partial(hUC_s)}{\partial x} + \frac{\partial(hVC_s)}{\partial z} = D_x \frac{\partial^2(hC_s)}{\partial x^2} + D_z \frac{\partial^2(hC_s)}{\partial z^2} - RhC_s - KhC_s + cq_l$$

wherein, $C_s$ represents the biogenic element concentration of the reservoir, c represents the biogenic element concentration of the side inflow, $D_x$ represents a diffusion coefficient in the riverway on-way direction, $D_z$ represents a diffusion coefficient in the riverway on-way vertical direction, R represents a chemical reaction rate, K represents an adsorption-desorption coefficient, and the solute retention information comprises the biogenic element concentration of the reservoir and the biogenic element concentration of the side inflow.

3. The method of claim 1, **characterized in that**, the step of determining the target discharge flow rate of the reservoir according to the current monitoring data and the target biogenic element concentration based on the flow rate regulating guidance model comprises:

inputting the target biogenic element concentration, which serves as $C_s$, and the current monitoring data into the flow rate regulating guidance model to obtain the discharge flow rate Q output by the flow rate regulating guidance model; and

determining the discharge flow rate Q output by the flow rate regulating guidance model as the target discharge flow rate of the reservoir.

4. The method of claim 2, **characterized in that**, the step of determining the target discharge flow rate of the reservoir according to the current monitoring data and the target biogenic element concentration based on the flow rate regulating guidance model comprises:

inputting the target biogenic element concentration, which serves as $C_s$, and the current monitoring data into the flow rate regulating guidance model to obtain the longitudinal average flow velocity t7 corresponding to the current water depth output by the flow rate regulating guidance model; and

determining the target discharge flow rate of the reservoir according to the longitudinal average flow velocity U and the water-passing area of the section of the reservoir.

5. The method of claim 1, **characterized in that**, the step of acquiring the historical monitoring data of the hydraulic engineering regulating area comprises:

acquiring monitoring data of the hydraulic engineering regulating area based on a fixed layered monitoring device and a layered monitoring device carried by a monitoring ship;

detecting the integrity of the monitoring data to obtain an integrity monitoring result of the monitoring data; and

supplementing missing values of the monitoring data according to the integrity monitoring result of the monitoring data so as to obtain historical monitoring data of the hydraulic engineering regulating area.

6. A reservoir flow rate regulating apparatus comprising:

a first acquisition module, configured to acquire historical monitoring data of a hydraulic engineering regulating area, wherein, the historical monitoring data is used to represent water quality information of the reservoir in the hydraulic engineering regulating area under different working condition indicators, and **characterised in that** the water quality information comprises a biogenic element concentration;

a model building module, configured to build a flow rate regulating guidance model of the reservoir based on the historical monitoring data, wherein, the flow rate regulating guidance model is coupled with a relationship between the biogenic element concentration and each working condition indicator;

a second acquisition module, configured to acquire current monitoring data and a target biogenic element concentration of the hydraulic engineering regulating area;

a determination module, configured to determine a target discharge flow rate of the reservoir according to the current monitoring data and the target biogenic element concentration based on the flow rate regulating guidance model; and

a regulating module, configured to perform corresponding flow rate regulating on the reservoir according to the target discharge flow rate,

wherein, the model building module is specifically configured to:

fit a water flow continuity equation of the hydraulic engineering regulating area according to water flow continuity information represented by the historical monitoring data;

fit a water flow motion equation of the hydraulic engineering regulating area according to the water flow continuity equation and water flow hydrodynamics information represented by the historical monitoring data;

fit a solute retention equation of the hydraulic engineering regulating area according to the water flow continuity equation, the water flow motion equation and solute retention information represented by the historical monitoring data; and

build the flow rate regulating guidance model of the reservoir based on the water flow continuity equation, the water flow motion equation and the solute retention equation;

the model building module is specifically configured to:

use the water flow continuity information represented by the historical monitoring data to fit the following water flow continuity equation of the hydraulic engineering regulating area:

$$\frac{\partial Q}{\partial x} + B\frac{\partial Z}{\partial t} = q_l$$

wherein, $x$ represents the on-way position coordinates of a riverway, $Q$ represents the discharge flow rate of a corresponding section, $t$ represents occurrence time, $Z$ represents water level, $B$ represents a water surface width, $q_l$ represents the side inflow rate per unit length of the river, and the water flow continuity information comprises the on-way position coordinates of the riverway, the discharge flow rate, the occurrence time, the water level, the water surface width and the side inflow rate per unit length of the river;

the model building module is specifically configured to:

use the water flow continuity equation and water flow hydrodynamics information represented by the historical monitoring data to fit the following water flow motion equation of the hydraulic engineering regulating area:

$$\frac{\partial Q}{\partial t} + \frac{\partial}{\partial x}\left(\frac{Q^2}{A}\right) + gA\frac{\partial Z}{\partial x} + g\frac{|Q|Q}{C^2AR} = q_lU_l$$

wherein, $A$ represents the water-passing area of a section, $R$ represents the hydraulic radius of the section, $C$ represents a Chezy coefficient, $g$ represents gravitational acceleration, $U_l$ represents a component of the average flow velocity of the side inflow section along a riverway direction, and the water flow hydrodynamics information comprises the water-passing area of the section, the hydraulic radius of the section and the component of the average flow velocity of the side inflow section along the riverway direction;

the model building module is specifically configured to:

use the water flow continuity equation, the water flow motion equation and the solute retention information represented by the historical monitoring data to fit the following solute retention equation of the hydraulic engineering regulating area:

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

wherein, $C_s$ represents the biogenic element concentration of the reservoir, $c$ represents the biogenic element concentration of the side inflow, $v$ represents the flow velocity of the water flow, $D$ represents a diffusion coefficient, $R$ represents a chemical reaction rate, $K$ represents an adsorption-desorption coefficient, and the solute retention information comprises the biogenic element concentration of the reservoir, the biogenic element concentration of the side inflow and the flow velocity of the water flow.

7. An electronic device, **characterized by** comprising: at least one processor and a memory,

wherein, the memory stores computer-executable instructions;
the at least one processor is configured to execute the computer-executable instructions stored in the memory to cause the at least one processor to perform the method according to any one of claims 1 to 5.

8. A computer-readable storage medium, **characterized in that**, the computer-readable storage medium stores computer-executable instructions; and the computer-executable instructions can be executed by a processor to perform the method according to any one of claims 1 to 5.

**Patentansprüche**

1. Verfahren zur Regelung der Reservoirflussrate, umfassend:

Erfassen von historischen Überwachungsdaten eines Wasserbauregelungsbereiches, wobei die historischen Überwachungsdaten verwendet werden, um Wasserqualitätsinformationen des Reservoirs in dem Wasserbauregelungsbereich unter unterschiedlichen Arbeitsbedingungsindikatoren darzustellen, und **dadurch gekennzeichnet, dass** die Wasserqualitätsinformationen eine Konzentration an biogenen Elementen umfasst;
Erstellen eines Flussratenregelungsführungsmodells des Reservoirs basierend auf den historischen Überwachungsdaten, wobei das Flussratenregelungsführungsmodell mit einer Beziehung zwischen der Konzentration an biogenen Elementen und jedem Arbeitsbedingungsindikator gekoppelt ist;
Erfassen aktueller Überwachungsdaten und einer Zielkonzentration an biogenen Elementen in dem Wasserbauregelungsbereich;
Bestimmen einer Zielauslaufflussrate des Reservoirs gemäß den aktuellen Überwachungsdaten und der Zielkonzentration an biogenen Elementen basierend auf dem Flussratenregelungsführungsmodell; und
Durchführen einer entsprechenden Flussratenregelung an dem Reservoir gemäß der Zielauslaufflussrate,
wobei der Schritt des Erstellens des Flussratenregelungsführungsmodells des Reservoirs basierend auf den historischen Überwachungsdaten Folgendes umfasst:

Anpassen einer Wasserflusskontinuitätsgleichung des Wasserbauregelungsbereiches gemäß Wasserflusskontinuitätsinformationen, die durch die historischen Überwachungsdaten dargestellt werden;
Anpassen einer Wasserflussbewegungsgleichung des Wasserbauregelungsbereiches gemäß der Wasserflusskontinuitätsgleichung und Wasserflusshydrodynamikinformationen, die durch die historischen Überwachungsdaten dargestellt werden;
Anpassen einer Gleichung für die Rückhaltung gelöster Stoffe des Wasserbauregelungsbereiches gemäß der Wasserflusskontinuitätsgleichung, der Wasserflussbewegungsgleichung und Informationen zur Rückhaltung gelöster Stoffe, die durch die historischen Überwachungsdaten dargestellt werden; und
Erstellen des Flussratenregelungsführungsmodells des Reservoirs basierend auf der Wasserflusskontinuitätsgleichung, der Wasserflussbewegungsgleichung und der Gleichung für die Rückhaltung gelöster Stoffe;
wobei der Schritt des Anpassens der Wasserflusskontinuitätsgleichung des Wasserbauregelungsbereiches gemäß den Wasserflusskontinuitätsinformationen, die durch die historischen Überwachungsdaten dargestellt werden, Folgendes umfasst:

Verwenden der Wasserflusskontinuitätsinformationen, die durch die historischen Überwachungsdaten dargestellt werden, um die folgende Wasserflusskontinuitätsgleichung des Wasserbauregelungsbereiches anzupassen:

$$\frac{\partial Q}{\partial x} + B\frac{\partial Z}{\partial t} = q_l$$

wobei x die Positionskoordinaten auf dem Weg eines Flusses darstellt, Q die Auslaufflussrate eines entsprechenden Abschnitts darstellt, t die Ereigniszeit darstellt, Z den Wasserstand darstellt, *B* eine Wasserflächenbreite darstellt, $q_l$ die Seiteneinlaufrate pro Längeneinheit des Flusses darstellt und die Wasserflusskontinuitätsinformationen die Positionskoordinaten auf dem Weg des Flusses, die Auslaufflussrate, die Ereigniszeit, den Wasserstand, die Wasserflächenbreite und die Seiteneinlaufrate pro Längeneinheit des Flusses umfassen;
wobei der Schritt des Anpassens der Wasserflussbewegungsgleichung des Wasserbauregelungsbereiches gemäß der Wasserflusskontinuitätsgleichung und Wasserflusshydrodynamikinformationen, die durch die historischen Überwachungsdaten dargestellt werden, Folgendes umfasst:

Verwenden der Wasserflusskontinuitätsgleichung und der Wasserflusshydrodynamikinformationen, die durch die historischen Überwachungsdaten dargestellt werden, um die folgende Wasserflussbewegungsgleichung des Wasserbauregelungsbereiches anzupassen:

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

wobei A den Wasserdurchtrittsbereich eines Abschnitts darstellt, R den hydraulischen Radius des Abschnitts darstellt, C einen Chezy-Koeffizienten darstellt, g die Fallbeschleunigung darstellt, $U_l$ eine Komponente der mittleren Fließgeschwindigkeit des Seiteneinlaufabschnitts entlang einer Flussrichtung darstellt und die Wasserflusshydrodynamikinformationen den Wasserdurchtrittsbereich des Abschnitts, den hydraulischen Radius des Abschnitts und die Komponente der mittleren Fließgeschwindigkeit des Seiteneinlaufabschnitts entlang der Flussrichtung umfassen;
wobei der Schritt des Anpassens der Gleichung für die Rückhaltung gelöster Stoffe des Wasserbauregelungsbereiches gemäß der Wasserflusskontinuitätsgleichung, der Wasserflussbewegungsgleichung und Informationen zur Rückhaltung gelöster Stoffe, die durch die historischen Überwachungsdaten dargestellt werden, Folgendes umfasst:

Verwenden der Wasserflusskontinuitätsgleichung, der Wasserflussbewegungsgleichung und der Informationen zur Rückhaltung gelöster Stoffe, die durch die historischen Überwachungsdaten dargestellt werden, um die folgende Gleichung für die Rückhaltung gelöster Stoffe des Wasserbauregelungsbereiches anzupassen:

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

wobei $C_s$ die Konzentration an biogenen Elementen des Reservoirs darstellt, c die Konzentration an biogenen Elementen des Seiteneinlaufs darstellt, v die Fließgeschwindigkeit des Wasserflusses darstellt, D einen Diffusionskoeffizienten darstellt, R eine chemische Reaktionsrate darstellt, K einen Adsorptions-Desorptions-Koeffizienten darstellt und die Informationen zur Rückhaltung gelöster Stoffe die Konzentration an biogenen Elementen des Reservoirs, die Konzentration an biogenen Elementen des Seiteneinlaufs und die Fließgeschwindigkeit des Wasserflusses umfassen.

2. Verfahren nach Anspruch 1, **dadurch gekennzeichnet, dass** der Schritt des Anpassens der Wasserflusskontinuitätsgleichung des Wasserbauregelungsbereiches gemäß den Wasserflusskontinuitätsinformationen, die durch die historischen Überwachungsdaten dargestellt werden, Folgendes umfasst:

Verwenden der Wasserflusskontinuitätsinformationen, die durch die historischen Überwachungsdaten dargestellt werden, um die folgende Wasserflusskontinuitätsgleichung des Wasserbauregelungsbereiches anzupassen:

$$\frac{\partial Z}{\partial t} + \frac{\partial (hU)}{\partial x} + \frac{\partial (hV)}{\partial z} = q_l$$

wobei $x$ die Positionskoordinaten auf dem Weg des Flusses darstellt, $t$ die Ereigniszeit darstellt, $z$ die Positionskoordinaten der vertikalen Richtung auf dem Weg des Flusses darstellt, $Z$ den Wasserstand darstellt, $h$ die Wassertiefe darstellt, $U$ und $V$ die mittlere Längsfließgeschwindigkeit bzw. die der Wassertiefe $h$ entsprechende mittlere vertikale Fließgeschwindigkeit darstellen und $q_l$ die Seiteneinlaufrate pro Längeneinheit des Flusses darstellt und die Wasserflusskontinuitätsinformationen die Positionskoordinaten auf dem Weg des Flusses, die Ereigniszeit, den Wasserstand, die Wassertiefe, die mittlere Längsfließgeschwindigkeit, die mittlere vertikale Fließgeschwindigkeit und die Seiteneinlaufrate pro Längeneinheit des Flusses umfassen;
wobei der Schritt des Anpassens der Wasserflussbewegungsgleichung des Wasserbauregelungsbereiches gemäß der Wasserflusskontinuitätsgleichung und den Wasserflusshydrodynamikinformationen, die durch die historischen Überwachungsdaten dargestellt werden, Folgendes umfasst:

Verwenden der Wasserflusskontinuitätsgleichung und der Wasserflusshydrodynamikinformationen, die durch die historischen Überwachungsdaten dargestellt werden, um die folgenden Wasserflussbewegungs-gleichungen des Wasserbauregelungsbereiches anzupassen:

$$\frac{\partial (hU)}{\partial t} + \frac{\partial (hU^2)}{\partial x} + \frac{\partial (hUV)}{\partial z}$$
$$= -gh\left(\frac{\partial Z}{\partial x} v_t \left(\frac{\partial^2 (hU)}{\partial x^2} + \frac{\partial^2 (hU)}{\partial z^2}\right) + \frac{n^2 U\sqrt{U^2 + V^2}}{h^{\frac{2}{3}}}\right)$$
$$+ q_l U_l$$

$$\frac{\partial (hV)}{\partial t} + \frac{\partial (hUV)}{\partial x} + \frac{\partial (hV^2)}{\partial z}$$
$$= -gh\left(\frac{\partial Z}{\partial x} v_t \left(\frac{\partial^2 hV}{\partial x^2} + \frac{\partial^2 hV}{\partial z^2}\right) + \frac{n^2 V\sqrt{U^2 + V^2}}{h^{\frac{2}{3}}}\right) + q_l v_l$$

wobei $U_l$ eine Komponente der mittleren Fließgeschwindigkeit des Seiteneinlaufabschnitts entlang der Flussrichtung darstellt, $v_l$ eine Komponente der mittleren Fließgeschwindigkeit des Seiteneinlaufabschnitts entlang der vertikalen Flussrichtung darstellt, $n$ einen Manning-Rauigkeitskoeffizienten darstellt, $v_t$ einen Wirbelviskositätskoeffizienten darstellt, $g$ die Fallbeschleunigung darstellt und die Wasserflusshydrodynamikinformationen die Komponente der mittleren Fließgeschwindigkeit des Seiteneinlaufabschnitts entlang der Flussrichtung und die Komponente der mittleren Fließgeschwindigkeit des Seiteneinlaufabschnitts entlang der vertikalen Flussrichtung umfassen;
wobei der Schritt des Anpassens der Gleichung für die Rückhaltung gelöster Stoffe des Wasserbauregelungsbereiches gemäß der Wasserflusskontinuitätsgleichung, der Wasserflussbewegungsgleichung und den Informationen zur Rückhaltung gelöster Stoffe, die durch die historischen Überwachungsdaten dargestellt werden, Folgendes umfasst: Verwenden der Wasserflusskontinuitätsgleichung, der Wasserflussbewegungsgleichung und der Informationen zur Rückhaltung gelöster Stoffe, die durch die historischen Überwachungsdaten dargestellt werden, um die folgende Gleichung für die Rückhaltung gelöster Stoffe des Wasserbauregelungsbereiches anzupassen:

$$\frac{\partial (hC_s)}{\partial t} + \frac{\partial (hUC_s)}{\partial x} + \frac{\partial (hvC_s)}{\partial z} = D_x \frac{\partial^2 (hC_s)}{\partial x^2} + D_z \frac{\partial^2 (hC_s)}{\partial z^2} - RhC_s - KhC_s + cq_l$$

wobei $C_s$ die Konzentration an biogenen Elementen des Reservoirs darstellt, $c$ die Konzentration an biogenen Elementen des Seiteneinlaufs darstellt, $D_x$ einen Diffusionskoeffizienten in der Richtung auf dem Weg des Flusses darstellt, $D_z$ einen Diffusionskoeffizienten in der vertikalen Richtung auf dem Weg des Flusses darstellt, R eine chemische Reaktionsrate darstellt, $K$ einen Adsorptions-Desorptions-Koeffizienten darstellt und die Informationen zur Rückhaltung gelöster Stoffe die Konzentration an biogenen Elementen des Reservoirs und die Konzentration an biogenen Elementen des Seiteneinlaufs umfassen.

3. Verfahren nach Anspruch 1, **dadurch gekennzeichnet, dass** der Schritt des Bestimmens der Zielauslaufflussrate des Reservoirs gemäß den aktuellen Überwachungsdaten und der Zielkonzentration an biogenen Elementen basierend auf dem Flussratenregelungsführungsmodell Folgendes umfasst:

Eingeben der Zielkonzentration an biogenen Elementen, die als $C_s$ dient, und der aktuellen Überwachungsdaten in das Flussratenregelungsführungsmodell, um die durch das Flussratenregelungsführungsmodell ausgegebene Auslaufflussrate $Q$ zu erlangen; und
Bestimmen der durch das Flussratenregelungsführungsmodell ausgegebenen Auslaufflussrate $Q$ als die Zielauslaufflussrate des Reservoirs.

4. Verfahren nach Anspruch 2, **dadurch gekennzeichnet, dass** der Schritt des Bestimmens der Zielauslaufflussrate des Reservoirs gemäß den aktuellen Überwachungsdaten und der Zielkonzentration an biogenen Elementen basierend auf dem Flussratenregelungsführungsmodell Folgendes umfasst:

Eingeben der Zielkonzentration an biogenen Elementen, die als $C_s$ dient, und der aktuellen Überwachungsdaten in das Flussratenregelungsführungsmodell, um die durch das Flussratenregelungsführungsmodell ausgegebene mittlere Längsfließgeschwindigkeit $U$, die der aktuellen Wassertiefe entspricht, zu erlangen; und
Bestimmen der Zielauslaufflussrate des Reservoirs gemäß der mittleren Längsfließgeschwindigkeit $U$ und dem Wasserdurchtrittsbereich des Abschnitts des Reservoirs.

5. Verfahren nach Anspruch 1, **dadurch gekennzeichnet, dass** der Schritt des Erfassens der historischen Überwachungsdaten des Wasserbauregelungsbereiches Folgendes umfasst:

Erfassen von Überwachungsdaten des Wasserbauregelungsbereiches basierend auf einem fixierten geschichteten Überwachungsgerät und einem durch ein Überwachungsschiff getragenen geschichteten Überwachungsgerät; Detektieren der Integrität der Überwachungsdaten, um ein Integritätsüberwachungsergebnis der Überwachungsdaten zu erlangen; und
Ergänzen fehlender Werte der Überwachungsdaten gemäß dem Integritätsüberwachungsergebnis der Überwachungsdaten, um historische Überwachungsdaten des Wasserbauregelungsbereiches zu erlangen.

6. Vorrichtung zur Regelung der Reservoirflussrate, umfassend:

ein erstes Erfassungsmodul, das dazu konfiguriert ist, historische Überwachungsdaten eines Wasserbauregelungsbereiches zu erfassen, wobei die historischen Überwachungsdaten verwendet werden, um Wasserqualitätsinformationen des Reservoirs in dem Wasserbauregelungsbereich unter unterschiedlichen Arbeitsbedingungsindikatoren darzustellen, und **dadurch gekennzeichnet, dass** die Wasserqualitätsinformationen eine Konzentration an biogenen Elementen umfassen;
ein Modellerstellungsmodul, das dazu konfiguriert ist, ein Flussratenregelungsführungsmodell des Reservoirs basierend auf den historischen Überwachungsdaten zu erstellen, wobei das Flussratenregelungsführungsmodell mit einer Beziehung zwischen der Konzentration an biogenen Elementen und jedem Arbeitsbedingungsindikator gekoppelt ist;
ein zweites Erfassungsmodul, das dazu konfiguriert ist, aktuelle Überwachungsdaten und eine Zielkonzentration an biogenen Elementen des Wasserbauregelungsbereiches zu erfassen;
ein Bestimmungsmodul, das dazu konfiguriert ist, eine Zielauslaufflussrate des Reservoirs gemäß den aktuellen Überwachungsdaten und der Zielkonzentration an biogenen Elementen basierend auf dem Flussratenregelungsführungsmodell zu bestimmen; und
ein Regelungsmodul, das dazu konfiguriert ist, eine entsprechende Flussratenregelung an dem Reservoir gemäß der Zielauslaufflussrate durchzuführen,
wobei das Modellerstellungsmodul speziell zu Folgendem konfiguriert ist:

Anpassen einer Wasserflusskontinuitätsgleichung des Wasserbauregelungsbereiches gemäß Wasserflusskontinuitätsinformationen, die durch die historischen Überwachungsdaten dargestellt werden;

Anpassen einer Wasserflussbewegungsgleichung des Wasserbauregelungsbereiches gemäß der Wasserflusskontinuitätsgleichung und Wasserflusshydrodynamikinformationen, die durch die historischen Überwachungsdaten dargestellt werden;

Anpassen einer Gleichung für die Rückhaltung gelöster Stoffe des Wasserbauregelungsbereiches gemäß der Wasserflusskontinuitätsgleichung, der Wasserflussbewegungsgleichung und Informationen zur Rückhaltung gelöster Stoffe, die durch die historischen Überwachungsdaten dargestellt werden; und

Erstellen des Flussratenregelungsführungsmodells des Reservoirs basierend auf der Wasserflusskontinuitätsgleichung, der Wasserflussbewegungsgleichung und der Gleichung für die Rückhaltung gelöster Stoffe;

wobei das Modellerstellungsmodul speziell zu Folgendem konfiguriert ist:

Verwenden der Wasserflusskontinuitätsinformationen, die durch die historischen Überwachungsdaten dargestellt werden, um die folgende Wasserflusskontinuitätsgleichung des Wasserbauregelungsbereiches anzupassen:

$$\frac{\partial Q}{\partial x} + B\frac{\partial Z}{\partial t} = q_l$$

wobei x die Positionskoordinaten auf dem Weg eines Flusses darstellt, $Q$ die Auslaufflussrate eines entsprechenden Abschnitts darstellt, t die Ereigniszeit darstellt, $Z$ den Wasserstand darstellt, $B$ eine Wasserflächenbreite darstellt, $q_l$ die Seiteneinlaufrate pro Längeneinheit des Flusses darstellt und die Wasserflusskontinuitätsinformationen die Positionskoordinaten auf dem Weg des Flusses, die Auslaufflussrate, die Ereigniszeit, den Wasserstand, die Wasserflächenbreite und die Seiteneinlaufrate pro Längeneinheit des Flusses umfassen;

wobei das Modellerstellungsmodul speziell zu Folgendem konfiguriert ist:

Verwenden der Wasserflusskontinuitätsgleichung und der Wasserflusshydrodynamikinformationen, die durch die historischen Überwachungsdaten dargestellt werden, um die folgende Wasserflussbewegungsgleichung des Wasserbauregelungsbereiches anzupassen:

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

wobei $A$ den Wasserdurchtrittsbereich eines Abschnitts darstellt, $R$ den hydraulischen Radius des Abschnitts darstellt, $C$ einen Chezy-Koeffizienten darstellt, $g$ die Fallbeschleunigung darstellt, $U_l$ eine Komponente der mittleren Fließgeschwindigkeit des Seiteneinlaufabschnitts entlang einer Flussrichtung darstellt und die Wasserflusshydrodynamikinformationen den Wasserdurchtrittsbereich des Abschnitts, den hydraulischen Radius des Abschnitts und die Komponente der mittleren Fließgeschwindigkeit des Seiteneinlaufabschnitts entlang der Flussrichtung umfassen;

wobei das Modellerstellungsmodul speziell zu Folgendem konfiguriert ist:

Verwenden der Wasserflusskontinuitätsgleichung, der Wasserflussbewegungsgleichung und der Informationen zur Rückhaltung gelöster Stoffe, die durch die historischen Überwachungsdaten dargestellt werden, um die folgende Gleichung für die Rückhaltung gelöster Stoffe des Wasserbauregelungsbereiches anzupassen:

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

wobei $C_s$ die Konzentration an biogenen Elementen des Reservoirs darstellt, c die Konzentration an biogenen Elementen des Seiteneinlaufs darstellt, $v$ die Fließgeschwindigkeit des Wasserflusses darstellt, $D$ einen Diffusionskoeffizienten darstellt, $R$ eine chemische Reaktionsrate darstellt, $K$ einen Adsorptions-Desorptions-Koeffizienten darstellt und die Informationen zur Rückhaltung gelöster Stoffe die Konzentration an biogenen Elementen des Reservoirs, die Konzentration an biogenen Elementen des Seiteneinlaufs und die Fließgeschwindigkeit des Wasserflusses umfassen.

7. Elektronisches Gerät, **gekennzeichnet durch** Folgendes: mindestens einen Prozessor und einen Speicher,

wobei der Speicher computerausführbare Anweisungen speichert;
wobei der mindestens eine Prozessor dazu konfiguriert ist, die in dem Speicher gespeicherten computerausführbaren Anweisungen auszuführen, um den mindestens einen Prozessor dazu zu veranlassen, das Verfahren nach einem der Ansprüche 1 bis 5 durchzuführen.

8. Computerlesbares Speichermedium, **dadurch gekennzeichnet, dass** das computerlesbare Speichermedium computerausführbare Anweisungen speichert; und die computerausführbaren Anweisungen durch einen Prozessor ausgeführt werden können, um das Verfahren nach einem der Ansprüche 1 bis 5 durchzuführen.

**Revendications**

1. Procédé de régulation de débit de réservoir, comprenant :

acquérir des données de surveillance historiques d'une zone de régulation d'ingénierie hydraulique, dans laquelle les données de surveillance historiques sont utilisées pour représenter des informations sur la qualité de l'eau du réservoir dans la zone de régulation d'ingénierie hydraulique sous différents indicateurs de conditions de travail, et **caractérisé en ce que** les informations sur la qualité de l'eau comprennent une concentration en éléments biogéniques ;
construire un modèle de guidage de régulation du débit du réservoir sur la base des données de surveillance historiques, dans lequel le modèle de guidage de régulation du débit est couplé à une relation entre la concentration en éléments biogéniques et chaque indicateur de condition de fonctionnement ;
acquérir des données de surveillance actuelles et une concentration cible en éléments biogéniques de la zone de régulation de l'ingénierie hydraulique ;
déterminer un débit de décharge cible du réservoir selon des données de surveillance actuelles et de la concentration cible en éléments biogéniques sur la base du modèle de guidage de régulation du débit ; et
effectuer une régulation de débit correspondante sur le réservoir selon le débit de décharge cible,
dans lequel, l'étape de construction du modèle de guidage de régulation du débit du réservoir sur la base des données de surveillance historiques comprend :

ajustement d'une équation de continuité de l'écoulement de l'eau de la zone de régulation de l'ingénierie hydraulique selon des informations sur la continuité de l'écoulement de l'eau représentées par les données de surveillance historiques ;
ajustement d'une équation de mouvement d'écoulement d'eau de la zone de régulation d'ingénierie hydraulique selon l'équation de continuité d'écoulement d'eau et des informations hydrodynamiques d'écoulement d'eau représentées par les données de surveillance historiques ;
ajuster une équation de rétention de soluté de la zone de régulation de l'ingénierie hydraulique selon l'équation de continuité de l'écoulement de l'eau, de l'équation de mouvement de l'écoulement de l'eau et des informations sur la rétention de soluté représentées par les données de surveillance historiques ; et
construction du modèle de guidage de régulation de débit de réservoir basé sur l'équation de continuité de l'écoulement de l'eau, l'équation de mouvement de l'écoulement de l'eau et l'équation de rétention de soluté ;
dans lequel, un ajustement d'une équation de continuité de l'écoulement de l'eau de la zone de régulation de l'ingénierie hydraulique selon des informations sur la continuité de l'écoulement de l'eau représentées par les données de surveillance historiques ;
utilisation des informations sur la continuité de l'écoulement de l'eau représentées par les données historiques de surveillance pour ajuster l'équation suivante de continuité de l'écoulement de l'eau de la zone de régulation de l'ingénierie hydraulique ;

$$\frac{\partial Q}{\partial x} + B \frac{\partial Z}{\partial t} = q_l$$

dans lequel x représente les coordonnées de position en cours de route d'une voie fluviale, Q représente le débit de décharge d'une section correspondante, t représente le temps d'occurrence, Z représente le niveau d'eau, *B* représente une largeur de surface d'eau, $q_l$ représente le débit d'entrée latéral par unité de longueur de la rivière, et les informations de continuité de l'écoulement de l'eau comprennent les coordonnées de position en cours de route de la voie fluviale, le débit de décharge, le temps d'occurrence, le niveau d'eau, la largeur de la surface de l'eau et le débit d'entrée latéral par unité de longueur de la rivière ; dans lequel l'étape de l'ajustement de l'équation de mouvement d'écoulement d'eau de la zone de régulation d'ingénierie hydraulique selon l'équation de continuité d'écoulement d'eau et des informations hydrodynamiques d'écoulement d'eau représentées par les données de surveillance historiques ; utilisation de l'équation de continuité d'écoulement d'eau et des informations hydrodynamiques d'écoulement d'eau représentées par les données de surveillance historiques à l'équation suivante du mouvement de l'eau dans la zone de régulation de l'ingénierie hydraulique,

$$\frac{\partial Q}{\partial t} + \frac{\partial}{\partial x}\left(\frac{Q^2}{A}\right) + g\frac{\partial Z}{\partial x} + g\frac{|Q|Q}{C^2 AR} = q_l U_l$$

dans lequel, A représente la zone de passage d'eau d'une section, R représente le rayon hydraulique de la section, C représente un coefficient de Chezy, g représente l'accélération gravitationnelle, $U_l$ représente une composante de la vitesse d'écoulement moyenne de la section d'écoulement latéral le long d'une direction de rivière, et les informations hydrodynamiques d'écoulement d'eau comprennent la zone de passage d'eau de la section, le rayon hydraulique de la section et la composante de la vitesse d'écoulement moyenne de la section d'écoulement latéral le long de la direction de rivière ; dans lequel l'étape d'ajustement d'une équation de rétention de soluté de la zone de régulation de l'ingénierie hydraulique selon l'équation de continuité de l'écoulement de l'eau, de l'équation de mouvement de l'écoulement de l'eau et des informations sur la rétention de soluté représentées par les données de surveillance historiques et comprend :

utilisation de l'équation de continuité de l'écoulement de l'eau, de l'équation de mouvement de l'écoulement de l'eau et des informations sur la rétention de soluté représentées par les données de surveillance historiques pour ajuster l'équation suivante de rétention des solutés de la zone de régulation de l'ingénierie hydraulique :

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

dans lequel, $C_s$ représente la concentration en éléments biogéniques du réservoir, c représente la concentration en éléments biogéniques de l'afflux latéral, *v* représente la vitesse d'écoulement de l'écoulement d'eau, D représente un coefficient de diffusion, R représente une vitesse de réaction chimique, K représente un coefficient d'adsorption-désorption, et les informations de rétention de soluté comprennent la concentration en éléments biogéniques du réservoir, la concentration en éléments biogéniques de l'afflux latéral et la vitesse d'écoulement de l'écoulement d'eau.

2. Procédé selon la revendication 1, **caractérisé en ce que** l'étape d'un ajustement d'une équation de continuité de l'écoulement de l'eau de la zone de régulation de l'ingénierie hydraulique selon des informations sur la continuité de l'écoulement de l'eau représentées par les données de surveillance historiques ;

   ajustement d'une équation de continuité de l'écoulement de l'eau de la zone de régulation de l'ingénierie hydraulique selon des informations sur la continuité de l'écoulement de l'eau représentées par les données de surveillance historiques :

$$\frac{\partial Z}{\partial t} + \frac{\partial(hU)}{\partial x} + \frac{\partial(hV)}{\partial z} = q_l$$

dans lequel x représente les coordonnées de position en cours de route de la voie fluviale, t représente le temps d'occurrence, z représente les coordonnées de position en cours de route de la voie fluviale, Z représente le niveau d'eau, *h* représente la profondeur de l'eau, *U* et V représentent respectivement la vitesse d'écoulement moyenne longitudinale et la vitesse d'écoulement moyenne verticale correspondant à la profondeur d'eau $h$, et $q_l$ représente le débit d'entrée latéral par unité de longueur de la rivière, et les informations de continuité d'écoulement d'eau comprennent les coordonnées de position en cours de route de la voie fluviale, le temps d'occurrence, le niveau d'eau, la profondeur de l'eau, la vitesse d'écoulement moyenne longitudinale, la vitesse d'écoulement moyenne verticale et le débit d'entrée latéral par unité de longueur de la rivière ;

l'étape de l'ajustement de l'équation de mouvement d'écoulement d'eau de la zone de régulation d'ingénierie hydraulique selon l'équation de continuité d'écoulement d'eau et des informations hydrodynamiques d'écoulement d'eau représentées par les données de surveillance historiques ;

utilisation de l'équation de continuité d'écoulement d'eau et des informations hydrodynamiques d'écoulement d'eau représentées par les données de surveillance historiques à l'équation suivante du mouvement de l'eau dans la zone de régulation de l'ingénierie hydraulique :

$$\frac{\partial(hU)}{\partial t} + \frac{\partial(hU^2)}{\partial x} + \frac{\partial(hUV)}{\partial z}$$
$$= -gh\left(\frac{\partial Z}{\partial x}v_t\left(\frac{\partial^2(hU)}{\partial x^2} + \frac{\partial^2(hU)}{\partial z^2}\right) + \frac{n^2U\sqrt{U^2+V^2}}{h^{\frac{2}{3}}}\right)$$
$$+ q_lU_l$$

$$\frac{\partial(hV)}{\partial t} + \frac{\partial(hUV)}{\partial x} + \frac{\partial(hV^2)}{\partial z}$$
$$= -gh\left(\frac{\partial Z}{\partial x}v_t\left(\frac{\partial^2 hV}{\partial x^2} + \frac{\partial^2 hV}{\partial z^2}\right) + \frac{n^2V\sqrt{U^2+V^2}}{h^{\frac{2}{3}}}\right) + q_lv_l$$

dans lequel, $U_l$ représente une composante de la vitesse d'écoulement moyenne de la section d'écoulement latéral le long de la direction de la rivière, $v_l$ représente une composante de la vitesse d'écoulement moyenne de la section d'écoulement latéral le long de la direction verticale de la rivière, $n$ représente un coefficient de rugosité de Manning, $v_t$ représente un coefficient de viscosité de turbulence, g représente l'accélération gravitationnelle, et les informations hydrodynamiques de l'écoulement de l'eau comprennent la composante de la vitesse d'écoulement moyenne de la section d'écoulement latéral le long de la direction de la rivière et la composante de la vitesse d'écoulement moyenne de la section d'écoulement latéral le long de la direction verticale de la rivière ;

l'étape d'ajustement d'une équation de rétention de soluté de la zone de régulation de l'ingénierie hydraulique selon l'équation de continuité de l'écoulement de l'eau, de l'équation de mouvement de l'écoulement de l'eau et des informations sur la rétention de soluté représentées par les données de surveillance historiques et comprend :

utilisation de l'équation de continuité de l'écoulement de l'eau, de l'équation de mouvement de l'écoulement de l'eau et des informations sur la rétention de soluté représentées par les données de surveillance historiques pour ajuster l'équation suivante de rétention des solutés de la zone de régulation de l'ingénierie hydraulique :

$$\frac{\partial(hC_s)}{\partial t} + \frac{\partial(hUC_s)}{\partial x} + \frac{\partial(hvC_s)}{\partial z} = D_x\frac{\partial^2(hC_s)}{\partial x^2} + D_z\frac{\partial^2(hC_s)}{\partial z^2} - RhC_s - KhC_s + cq_l$$

dans lequel, $C_s$ représente la concentration en éléments biogéniques du réservoir, c représente la concentration en éléments biogéniques de l'afflux latéral, $D_x$ représente un coefficient de diffusion dans la direction de la voie fluviale, $D_z$ représente un coefficient de diffusion dans la direction verticale de la voie fluviale, $R$ représente un taux de réaction chimique, $K$ représente un coefficient d'adsorption-désorption, et les informations de rétention de soluté comprennent la concentration en éléments biogéniques du réservoir et la concentration en éléments biogéniques de l'afflux latéral.

3. Procédé selon la revendication 1, **caractérisé en ce que** l'étape de détermination du débit de décharge cible du réservoir en fonction des données de surveillance actuelles et de la concentration cible en éléments biogéniques sur la base du modèle de guidage de régulation du débit comprend :

saisir la concentration de l'élément biogénique cible, qui sert de $C_s$, et les données de surveillance actuelles dans le modèle de guidage de régulation du débit pour obtenir le débit de décharge $Q$ produit par le modèle de guidage de régulation du débit ; et

déterminer le débit de décharge $Q$ produit par le modèle de guidage de régulation de débit comme débit de décharge cible du réservoir.

4. Procédé selon la revendication 2, **caractérisé en ce que** l'étape de détermination du débit de décharge cible du réservoir en fonction des données de surveillance actuelles et de la concentration cible en éléments biogéniques sur la base du modèle de guidage de régulation du débit comprend :

saisir la concentration cible en éléments biogéniques, qui sert de $C_s$, et les données de surveillance actuelles dans le modèle de guidage de régulation du débit pour obtenir la vitesse d'écoulement moyenne longitudinale $U$ correspondant à la profondeur d'eau actuelle produite par le modèle de guidage de régulation du débit ; et déterminer le débit de décharge cible du réservoir selon la vitesse d'écoulement moyenne longitudinale $U$ et de la surface de passage de l'eau de la section du réservoir.

5. Procédé selon la revendication 1, **caractérisé en ce que**, l'étape d'acquisition des données de surveillance historiques de la zone de régulation d'ingénierie hydraulique comprend :

acquérir des données de surveillance de la zone de régulation de l'ingénierie hydraulique sur la base d'un dispositif de surveillance en couches fixe et d'un dispositif de surveillance en couches transporté par un navire de surveillance ;

détecter l'intégrité des données de surveillance pour obtenir un résultat de surveillance de l'intégrité des données de surveillance ; et

compléter les valeurs manquantes des données de surveillance selon le résultat de la surveillance de l'intégrité des données de surveillance afin d'obtenir des données de surveillance historiques de la zone de régulation de l'ingénierie hydraulique.

6. Appareil de régulation du débit de réservoir comprenant :

un premier module d'acquisition, configuré pour acquérir des données de surveillance historiques d'une zone de régulation d'ingénierie hydraulique, les données de surveillance historiques étant utilisées pour représenter des informations sur la qualité de l'eau du réservoir dans la zone de régulation d'ingénierie hydraulique sous différents indicateurs de conditions de travail, et **caractérisé en ce que** les informations sur la qualité de l'eau comprennent une concentration d'éléments biogéniques ;

construire un modèle de guidage de régulation du débit du réservoir sur la base des données de surveillance historiques, dans lequel le modèle de guidage de régulation du débit est couplé à une relation entre la concentration en éléments biogéniques et chaque indicateur de condition de fonctionnement ;

un deuxième module d'acquisition, configuré pour acquérir des données de surveillance actuelles et une concentration cible d'éléments biogéniques de la zone de régulation d'ingénierie hydraulique ;

déterminer un débit de décharge cible du réservoir selon des données de surveillance actuelles et de la concentration cible en éléments biogéniques sur la base du modèle de guidage de régulation du débit ; et

un module de régulation, configuré pour effectuer une régulation de débit correspondante sur le réservoir en fonction du débit de décharge cible,

dans lequel le module de construction de modèle est spécifiquement configuré pour :

installer une équation de continuité de l'écoulement de l'eau de la zone de régulation de l'ingénierie hydraulique selon des informations sur la continuité de l'écoulement de l'eau représentées par les données de surveillance historiques ;

ajuster une équation de mouvement d'écoulement d'eau de la zone de régulation d'ingénierie hydraulique selon l'équation de continuité d'écoulement d'eau et des informations hydrodynamiques d'écoulement d'eau représentées par les données de surveillance historiques ;

ajuster une équation de rétention de soluté de la zone de régulation de l'ingénierie hydraulique selon l'équation de continuité de l'écoulement de l'eau, de l'équation de mouvement de l'écoulement de l'eau et des informations sur la rétention de soluté représentées par les données de surveillance historiques ; et

construction du modèle de guidage de régulation de débit de réservoir basé sur l'équation de continuité de l'écoulement de l'eau, l'équation de mouvement de l'écoulement de l'eau et l'équation de rétention de soluté ; le module de construction de modèle est spécifiquement configuré pour :

ajustement d'une équation de continuité de l'écoulement de l'eau de la zone de régulation de l'ingénierie hydraulique selon des informations sur la continuité de l'écoulement de l'eau représentées par les données de surveillance historiques :

$$\frac{\partial Q}{\partial x} + B\frac{\partial Z}{\partial t} = q_l$$

dans laquelle x représente les coordonnées de position en cours de route d'une voie fluviale, $Q$ représente le débit de décharge d'une section correspondante, $t$ représente le temps d'occurrence, $Z$ représente le niveau d'eau, B représente une largeur de surface d'eau, $q_l$ représente le débit d'entrée latéral par unité de longueur de la rivière, et les informations de continuité de l'écoulement de l'eau comprennent les coordonnées de position en cours de route de la voie fluviale, le débit de décharge, le temps d'occurrence, le niveau d'eau, la largeur de la surface de l'eau et le débit d'entrée latéral par unité de longueur de la rivière ;
module de construction de modèle est spécifiquement configuré pour :

utiliser l'équation de continuité d'écoulement d'eau et des informations hydrodynamiques d'écoulement d'eau représentées par les données de surveillance historiques à l'équation suivante du mouvement de l'eau dans la zone de régulation de l'ingénierie hydraulique,

$$\frac{\partial Q}{\partial t} + \frac{\partial}{\partial x}\left(\frac{Q^2}{A}\right) + gA\frac{\partial Z}{\partial x} + g\frac{|Q|Q}{C^2 AR} = q_l U_l$$

dans laquelle, A représente la zone de passage d'eau d'une section, R représente le rayon hydraulique de la section, $C$ représente un coefficient de Chezy, $g$ représente l'accélération gravitationnelle, $U_l$ représente une composante de la vitesse d'écoulement moyenne de la section d'écoulement latéral le long d'une direction de rivière, et les informations hydrodynamiques d'écoulement d'eau comprennent la zone de passage d'eau de la section, le rayon hydraulique de la section et la composante de la vitesse d'écoulement moyenne de la section d'écoulement latéral le long de la direction de rivière ;
le module de construction de modèle est spécifiquement configuré pour :

utiliser l'équation de continuité de l'écoulement de l'eau, de l'équation de mouvement de l'écoulement de l'eau et des informations sur la rétention de soluté représentées par les données de surveillance historiques pour ajuster l'équation suivante de rétention des solutés de la zone de régulation de l'ingénierie hydraulique :

$$\frac{\partial AC_s}{\partial t} = \frac{\partial vAC_s}{\partial x} + \frac{\partial}{\partial x}\left(DA\frac{\partial C_s}{\partial x}\right) - RAC_s - KAC_s + cq_l$$

dans laquelle, $C_s$ représente la concentration en éléments biogéniques du réservoir, c représente la concentration en éléments biogéniques de l'afflux latéral, $v$ représente la vitesse d'écoulement de l'écoulement d'eau, $D$ représente un coefficient de diffusion, $R$ représente une vitesse de réaction chimique, $K$ représente un coefficient d'adsorption-désorption, et les informations de rétention de soluté comprennent la concentration en éléments biogéniques du réservoir, la concentration en éléments biogéniques de l'afflux latéral et la vitesse d'écoulement de l'écoulement d'eau.

7. Dispositif électronique, **caractérisé en ce qu'**il comprend :

au moins un processeur et une mémoire,

dans lequel la mémoire stocke des instructions exécutables par ordinateur ;
le ou les processeurs sont configurés pour exécuter les instructions exécutables par ordinateur stockées dans la mémoire pour amener le ou les processeurs à exécuter le procédé selon l'une quelconque des revendications 1 à 5.

8. Support de stockage lisible par ordinateur, **caractérisé en ce que** le support de stockage lisible par ordinateur stocke des instructions exécutables par ordinateur ; et les instructions exécutables par ordinateur peuvent être exécutées par un processeur pour mettre en œuvre le procédé selon l'une quelconque des revendications 1 à 5.

Reservoir flow rate regulating system

Reservoir

Reservoir flow rate
regulating apparatus

Data acquisition
apparatus

FIG. 1

Acquire historical monitoring data of a hydraulic engineering regulating area — 201

Build a flow rate regulating guidance model of a reservoir based on the historical monitoring data — 202

Acquire current monitoring data and a target biogenic element concentration of the hydraulic engineering regulating area — 203

Determine a target discharge flow rate of the reservoir according to the current monitoring data and the target biogenic element concentration based on the flow rate regulating guidance model — 204

performing corresponding flow rate regulating on the reservoir according to the target discharge flow rate — 205

FIG. 2

FIG. 3

40

Reservoir flow rate regulating apparatus

| First acquisition module | Model building module | Second acquisition module | Determination module | Regulating module |

401 402 403 404 405

FIG. 4

Electronic device
50

Memory
52

Processor
51

FIG. 5

**REFERENCES CITED IN THE DESCRIPTION**

**Patent documents cited in the description**

- CN 106447078 A

- CN 108695902 B